# NEUE EUROPÄISCHE PATENTSCHRIFT

(11) **EP 2 734 754 B2**
(45) Veröffentlichungstag und Bekanntmachung des Hinweises auf die Entscheidung über den Einspruch: **14.08.2019**
(45) Hinweis auf die Patenterteilung: 04.11.2015
(21) Anmeldenummer: 12738116.8
(22) Anmeldetag: 20.07.2012
(51) Int. Cl.: F16J 15/08

(54) **FLACHDICHTUNG**
FLAT SEAL
JOINT PLAT

(30) Priorität: 20.07.2011 DE 202011103420 U; 16.02.2012 DE 102012003149
(43) Veröffentlichungstag der Anmeldung: 28.05.2014
(73) Patentinhaber: REINZ-Dichtungs-GmbH, 89233 Neu-Ulm (DE)
(72) Erfinder: EGLOFF, Georg, 89264 Oberh./Weißenhorn (DE); HÖHE, Kurt, 89129 Langenau (DE); GÜTERMANN, Armin, 89340 Leipheim (DE); PENDZIALEK, Matthias, 89077 Ulm (DE)
(74) Vertreter: Pfenning, Meinig & Partner mbB
(86) Internationale Anmeldenummer: PCT/EP2012/064308
(87) Internationale Veröffentlichungsnummer: WO 2013/011132

(56) Entgegenhaltungen:
- EP-A2- 2 270 366
- EP-A2- 2 270 366
- DE-A1- 10 053 556
- DE-A1- 10 237 555
- DE-A1-102008 062 829
- DE-B3-102009 008 019
- DE-B3-102009 008 019
- DE-C1- 19 823 115
- US-A- 5 979 035
- US-A- 5 979 905
- US-A- 6 044 537
- US-B1- 6 283 480

## Beschreibung

Die vorliegende Erfindung betrifft eine Flachdichtung, wie sie insbesondere im Kraftfahrzeugbau eingesetzt wird. Derartige Flachdichtungen finden beispielsweise als Dichtungen im Abgasstrang von Verbrennungsmotoren, als Zylinderkopfdichtungen oder auch als Hydrauliksystemsteuerplatten Verwendung. Hydrauliksystemsteuerplatten, wie beispielsweise Getriebesteuerplatten weisen neben einer Fluidsteuerfunktion immer auch zugleich eine Dichtfunktion auf.

Flachdichtungen weisen häufig einen mehrlagigen Aufbau auf. Als erste Lage wird dabei üblicherweise eine Distanzlage eingesetzt, die aufgrund ihrer vorbestimmten Dicke einen bestimmten Abstand zwischen zwei über die Flachdichtung miteinander verbundenen Bauteilen einstellt. Als weitere Lage befindet sich dann auf dieser ersten Distanzlage eine Dichtungslage, die beispielsweise Abdichtungselemente wie Sicken oder Beschichtungen aufweisen kann. Derartige Dichtungslagen stellen die eigentliche Abdichtung zwischen den über die Flachdichtung miteinander verbundenen Bauteilen her und werden im Folgenden als "Dichtlagen" bezeichnet. Weitere Lagen können hinzugefügt werden.

Bei derartigen mehrlagigen Flachdichtungen ist es erforderlich, die einzelnen Lagen zumindest für den Transport bis zur Endmontage miteinander zu verbinden, so dass jeweils eine Flachdichtung als Einheit gehandhabt werden kann. Dazu werden die Lagen herkömmlicherweise miteinander verschweißt, vernietet oder auch durch Umbördeln der Lagenränder miteinander verbunden.

Diese herkömmlichen Verbindungstechniken weisen eine Vielzahl von Nachteilen auf. So hat sich in der Praxis gezeigt, dass eine Lagenverbindung über Schweißpunkte immer auch zu Schweißperlen führt, die sich nach Einbau der Flachdichtung lösen und zum Verstopfen von Durchgangsöffnungen in der Flachdichtung oder einem angrenzenden Bauteil führen können. Schweißverfahren sind weiterhin lediglich bei Dichtungslagen einsetzbar, die nicht beschichtet sind.

Die Verbindung zweier Dichtungslagen mittels eines Niets führt im Bereich des Niets zu einer Aufdickung bzw. zu einem lokalen Überstand des Niets über die Dichtungslagen. Weiterhin führt ein Vernieten immer zur Spanbildung, die in Durchgangslöcher der Flachdichtung oder auch eines angrenzenden Bauteils verschleppt werden können. Nicht zuletzt erfordert eine Nietverbindung zusätzliche Bauelemente (Niete) und zusätzliche Verbindungsschritte.

Das Umbördeln von Rändern zur Verbindung benachbarter Dichtungslagen erfordert eine gezielte Gestaltung des Außenrandes der benachbarten Lagen, sei es durch Stufungen oder einen schrägen Verlauf, gezielte Rücksprünge oder dergleichen. Hierdurch wird der Aufwand für die Werkzeugherstellung vergrößert. Außerdem können die Dichtungslagen auf diese Weise nur an ihren Außenrändern miteinander verbunden werden. Auch ein Umbördeln führt im Bereich des Bördels zu einer Aufdickung der Flachdichtung.

Dies ist auch der Fall, wenn Lagen einer Flachdichtung mittels Durchsetzfügens (Clinchen) miteinander verbunden werden. Dies ist auch der Fall beim mit dem Durchsetzfügen verwandten Toxen.

Die DE 100 53 556 A1 offenbart eine mehrlagige Dichtung und ein Verfahren zum Verbinden der Lagen einer solchen Dichtung. Zur Verbindung zweier Lagen werden dabei die aufeinanderliegenden Lagen an ihren benachbart zueinander verlaufenden Innnenrändern gemeinsam umgebördelt.

Die DE 102 37 555 A1 offenbart eine mehrlagige Dichtung und ein Verfahren zum Verbinden der Lagen einer solchen Dichtung mit einer Verbindungseinrichtung. Die Verbindungseinrichtung weist ein mit der ersten Lage verbundenes Halteelement und eine Durchgangsöffnung in einer zweiten Lage mit einem Haltebereich auf. Das Halteelement und der Haltebereich überlappen in einem unverbundenen Zustand teilweise miteinander. Zum Verbinden der Lagen ist das Halteelement aus der Ebene der ersten Lage heraus verformbar und an dem Haltebereich vorbeibewegbar. Im verbundenen Zustand der Lagen hintergreift das Halteelement den Haltebereich.

Aufgabe der vorliegenden Erfindung ist es daher, eine mehrlagige Flachdichtung zur Verfügung zu stellen, bei der die einzelnen Dichtungslagen ohne Aufdickung und ohne Verunreinigungen, wie beispielsweise Spanbildung oder Abrieb, hinreichend miteinander verbunden werden können. Aufgabe der vorliegenden Erfindung ist es weiterhin, ein Verfahren zum Verbinden der Lagen einer mehrlagigen Flachdichtung zur Verfügung zu stellen, das einfach und kostengünstig durchzuführen ist, mittels einfacher und kostengünstiger Werkzeuge durchgeführt werden kann und weder zu einer Aufdickung noch zu einer Verunreinigung der Flachdichtung bei dennoch hinreichender Verbindung der einzelnen Dichtungslagen führt.

Diese Aufgabe wird durch die Flachdichtung nach Anspruch 1, das Verfahren nach Anspruch 8 sowie die Verwendung nach Anspruch 11 gelöst. Vorteilhafte Weiterbildungen der erfindungsgemäßen Flachdichtung und des erfindungsgemäßen Verfahrens werden in den jeweiligen abhängigen Ansprüchen gegeben.

Als Beispiele für erfindungsgemäße Flachdichtungen sollen hier Dichtungen im Abgasstrang oder Zylinderkopfdichtungen eines Verbrennungsmotors genannt werden. Ein weiteres Beispiel für eine erfindungsgemäße Flachdichtung ist eine Hydrauliksystemsteuerplatte, insbesondere eine Getriebesteuerplatte, beispielsweise eines Kraftfahrzeuggetriebes. In allen diesen Fällen wird durch das erfindungsgemäße Verbindungsverfahren eine Flachdichtung hergestellt, bei der mindestens zwei der Lagen hinreichend während des Transportes bis zur Endmontage der Flachdichtung miteinander verbunden sind.

Erfindungsgemäß weist die Flachdichtung mindestens eine erste und eine zweite metallische Lage auf. Als erste Lage kann beispielsweise ein Distanzblech vorgesehen sein, während als zweite Lage eine Bodenlage oder Decklage auf oder unter dem Distanzblech angeordnet sein kann. Derartige Boden- oder Decklagen können als Dichtlagen ausgebildet sein, indem sie Abdichtelemente, beispielsweise elastomere Beschichtungen oder Dichtsicken aufweisen.

Diese zwei metallischen Lagen, ggf. auch weitere metallische Lagen, sind mittels mindestens einer Verbindungsstelle erfindungsgemäß miteinander verbunden.

Hierzu weist die erste Lage einen Rand auf, zu dem benachbart, d.h. oberhalb oder unterhalb die zweite Lage mindestens eine freie Kante aufweist. Die freie Kante der zweiten Lage ist derart abgekröpft, dass sie zumindest abschnittsweise benachbart zu dem Rand innerhalb der Lagendicke der ersten Lage verläuft. Alternativ kann die freie Kante auch derart stark abgekröpft sein, daß die zumindest abschnittsweise auf der von der zweiten Lage (2) abgewandten Seite der ersten Lage (1) teilweise oder vollständig außerhalb der Lagendicke der ersten Lage (1) verläuft. Mit anderen Worten ist die frei Kante der zweiten Lage derart abgekröpft, daß sie zumindest abschnittsweise innerhalb der zweiten Lage oder auf der anderen, der ersten Lage abgewandten Seite der zweiten Lage verläuft.

Der Rand der ersten Lage ist nun so ausgebildet, dass er die freie Kante oberhalb und/oder unterhalb der zweiten Lage im Bereich der freien Kante übergreift und so die zweite Lage an der ersten Lage formschlüssig hält. Ein beidseitiges Übergreifen ist möglich, wenn die freie Kante innerhalb der ersten Lage verläuft. Verläuft die freie Kante vollständig oder zum Teil außerhalb der ersten Lage, d.h. durchgreift die Abkröpfung der zweiten Lage zur Ausbildung der freien Kante die erste Lage, so kann die erste Lage die freie Kante nur einseitig in der Ebene der ersten Lage übergreifen, verhindert jedoch so ein Lösen der zweiten Lage von der ersten Lage.

Eine derartige Verbindungsstelle kann beispielsweise dadurch hergestellt werden, dass die freie Kante zuerst mittels eines Verformungsverfahrens entsprechend abgekröpft wird und anschließend der Rand der ersten Lage derart verpresst wird, dass oberhalb und/oder unterhalb der freien Kante Material des Randes der ersten Lage derart verfließt, dass es die Kante ober- und/oder unterhalb der freien Kante übergreift. Durch diesen Übergriff wird ein Formschluss in eine Richtung hergestellt, sofern der Übergriff oberhalb oder unterhalb der freien Kante erfolgt. Erfolgt der Übergriff sowohl oberhalb als auch unterhalb der freien Kante, so wird hierdurch ein vollständiger Formschluss in senkrechter Richtung zur Lagenebene hergestellt. Durch die Kröpfung der zweiten Lage derart, dass die freie Kante sich innerhalb der Dicke der ersten Lage befindet, wird zugleich in der Lagenebene ein Formschluss hergestellt.

Mittels einer derartigen Verbindungsstelle kann eine hinreichende Transportsicherung der mehreren Lagen einer Flachdichtung hergestellt werden. Vorteilhafterweise tritt bei einer derartigen erfindungsgemäßen Verbindung keinerlei Abrieb oder Spanbildung auf, so dass Verunreinigungen vermieden und Reinheitsanforderungen an die erfindungsgemäßen Flachdichtungen erfüllt werden können.

Weiterhin vermeidet die erfindungsgemäße Verbindungstechnik lokale Aufdickungen im Bereich der Verbindungsstelle, so dass die Verbindungsstellen auch im Verpressungsbereich der Flachdichtung liegen können. Dies ist u.a. eine Folge der erfindungsgemäßen Verprägegeometrie innerhalb der Ebene der ersten Lage.

Vorteilhaft ist weiterhin, dass kein zusätzliches Verbindungselement, beispielsweise ein Niet, benötigt wird. Hierdurch wird das Verbindungsverfahren vereinfacht und kostengünstiger.

Die erfindungsgemäße Verbindungsstelle besitzt nur geringen Platzbedarf und kann auch miniaturisiert werden. Sie ist nicht nur im Innenbereich der Lagen einsetzbar, sondern auch an deren Außenkanten. Diese beliebige Positionierung ermöglicht es, die Lagen optimal und kostengünstig miteinander zu verbinden.

Die erfindungsgemäße Verbindungstechnik ist gegenüber dem Verschweißen nicht auf unbeschichtete oder partiell beschichtete Dichtungslagen beschränkt, sondern ist auch mit beschichteten Lagen möglich.

Das erfindungsgemäße Verbindungsverfahren zeichnet sich zusätzlich durch eine sehr einfache Werkzeuggeometrie aus. Sämtliche Löcher, die für das erfindungsgemäße Verbindungsverfahren notwendig sind, können zusammen mit den sonstigen Löchern gestanzt werden. Es ist möglich, sämtliche Verformungsschritte, also das Abkröpfen der freien Kante der zweiten Lage und das Verpressen des Randes der ersten Lage in mehreren Schritten durchzuführen.

Es kann jedoch hierfür auch ein einfaches Werkzeug eingesetzt werden, das beide Schritte des Verbindungsverfahrens durchführt, so dass lediglich ein einziger Arbeitsschritt erforderlich ist.

Da die Lagen für das erfindungsgemäße Verbindungsverfahren nicht zuvor zusätzlich vorbereitet werden müssen, können sämtliche Verformungsschritte des Verbindungsverfahrens erst beim Verbinden der Lagen durchgeführt werden.

Das erfindungsgemäße Verfahren ermöglicht eine Einzelpunktverbindung, wobei bei einem beidseitigen Übergreifen des Randes der ersten Lage über die freie Kante der zweiten Lage ein Formschluss von beiden Seiten erfolgt oder bei nur einseitigem Übergreifen lediglich ein Formschluss in eine Richtung erfolgt. Im letzteren Falle kann, sofern erforderlich, durch mehrere Verbindungsstellen ebenfalls eine vollständige Verbindung der Lagen und Sicherung der Lagen gegen Relativverschiebungen erfolgen.

Das erfindungsgemäße Verfahren erfordert keine innere Mechanik des Prägewerkzeugs und ist seinerseits innerhalb der Ebene richtungsunabhängig. Aufgrund seiner einfachen Ausgestaltung eignet es sich für einen raschen Übergang vom Prototyp in die Serie.

In einer besonders vorteilhaften Ausführungsform weist die zweite Lage einen Steg auf, dessen Außenkanten zumindest bereichsweise als freie Kante benachbart zu dem Rand der ersten Lage verlaufen. Weist die erste Lage zusätzlich eine Durchbrechung auf, deren Umfangsrand als oben genannter Rand der ersten Lage ausgebildet ist, so kann der Steg der zweiten Lage geeignet abgekröpft und von beiden Außenkanten vom Rand der Durchbrechung der ersten Lage übergriffen werden.

Die Geometrie des Stegs lässt eine beliebige Variabilität zu. Vorteilhafterweise kann der Steg eine gerade, gekrümmte, runde, eckige, ovale oder sonstige Form aufweisen. Der Steg kann vorteilhafterweise symmetrisch zu seiner Längsachse und/oder zu seiner Querachse oder auch rotationssymmetrisch um seine Mitte oder eine andere Stelle des Steges ausgebildet sein. Derart symmetrische Stege und symmetrische Verbindungsstellen ermöglichen eine besonders einfache Gestaltung des Werkzeugs, eine besonders einfache Handhabung und auch eine richtungsunabhängige Verbindung der einzelnen Lagen.

Vorteilhaft können mit den erfindungsgemäßen Verfahren auch Flachdichtungen mit mehr als zwei Dichtungslagen, beispielsweise mit einer Distanzlage, einem Deckblech, einem Bodenblech (die letzten beiden beispielsweise als Dichtlagen ausgebildet) und ggf. auch eine Sieblage, beispielsweise eine metallische Gewebelage, ausgebildet werden. Auch die Distanzlage selbst kann aus mehreren Blechen bestehen. Das Sieb dient dem Fernhalten von Verunreinigungen.

In diesem Falle ist es möglich, jeweils zwei benachbarte Lagen paarweise mittels erfindungsgemäßer Verbindungsstellen miteinander zu verbinden, so dass sich zuletzt ein in sich miteinander verbundener Verbund von metallischen Lagen der Flachdichtung ergibt. Die Verbindungsstellen können sich auch durch mehr als zwei Lagen erstrecken, so kann beispielsweise die freie Kante einer Lage sich durch eine Durchbrechung in einer oder mehreren benachbarten Lagen erstrecken (abgekröpft sein) und von einem Rand einer hinter diesen mit Durchbrechungen versehenen Lagen angeordneten weiteren Lage übergriffen sein.

Es ist auch möglich, dass mehrere benachbarte oder einander gegenüberliegende Dichtungslagen eine freie Kante aufweisen, die derart abgekröpft sind, dass sie gemeinsam von dem Rand einer weiteren Dichtungslage übergriffen werden.

Sind mehrere Verbindungsstellen für verschiedene Dichtungslagenkombinationen vorgesehen, so können diese Verbindungsstellen, da sie zu keiner Aufdickung der Lagen führen, in zur Lagenebene senkrechter Richtung übereinander angeordnet sein.

Es ist jedoch auch möglich, die Verbindungsstellen in verschiedenen Dichtungslagen in der Lagenebene versetzt zueinander anzuordnen. In einer Projektion der Ebenen, in denen sich die verschiedenen Verbindungsstellen befinden, in eine gemeinsame Ebene liegen die Verbindungsstellen dann nicht an derselben Stelle. Hierdurch ist es möglich, die aus mehreren Dichtungslagen bestehende Flachdichtung in Richtung senkrecht zur Dichtungsebene fluiddicht zu gestalten, da die Verbindungsstellen jeweils nur einen Durchlass für Fluide über die miteinander verbundenen Dichtungslagen ermöglichen, zu denen sich benachbart zu der Verbindungsstelle jeweils noch mindestens eine weitere Dichtungslage befindet, die benachbart zu der Verbindungsstelle keine Durchbrechung aufweist und folglich die Dichtigkeit senkrecht zur Dichtungsebene der gesamten Flachdichtung gewährleistet.

Für eine optimale gegenseitige Befestigung der Lagen ist es bevorzugt, wenn die Verbindungsstellen einer zweiten Dichtungslage mit der ersten Lage, beispielsweise einer Distanzlage, möglichst gleichmäßig über die Flachdichtung verteilt sind und sowohl einen Abstand zueinander als auch zum Außenrand der Flachdichtung aufweisen.

Es ist jedoch auch möglich, eine oder mehrere Verbindungsstellen in der Nähe des Außenrandes der Flachdichtung anzuordnen. Dabei kann es bevorzugt sein, die zweite Lage nicht nur im unmittelbar an den Verbindungsstellen angrenzenden Bereich auszusparen, sondern die Aussparung bis an eine virtuell verlaufende Außenrandlinie zu verlängern, so dass der erfindungsgemäße Rand der zweiten Lage einen Teil des Außenrandes der zweiten Lage darstellt.

Bei der erfindungsgemäßen Flachdichtung ist es bevorzugt, wenn sowohl die erste Lage (beispielsweise eine Distanzlage) als auch die zweite Lage (beispielsweise eine Dichtlage) aus einem Stahlblech, insbesondere aus einem Blech aus Kohlenstoffstahl oder Edelstahl bestehen oder diese enthalten. Dabei wird für Dichtlagen üblicherweise ein Werkstoff mit einer größeren Zugfestigkeit als für Distanzlagen verwendet. Es hängt aber von der jeweiligen Anwendung ab, ob die Dichtlagen aus einem federharten Stahl oder aus einem nicht-federhartem Stahl hergestellt werden. Für Distanzlagen wird vorteilhafterweise ein Stahl mit einer Zugfestigkeit < 900 N/mm², bevorzugt < 700 N/mm², verwendet.

Für eine optimale Abdichtung ist es bevorzugt, wenn zumindest eine der Dichtungslagen zumindest auf einer Oberfläche zumindest im Bereich geprägter Dichtelemente beschichtet ist. Üblicherweise wird jedoch zumindest die zu einer Distanzlage weisende Oberfläche mindestens einer Dichtlage zumindest im Bereich geprägter Dichtelemente und im beidseitig unmittelbar angrenzenden Bereich etwa über die Breite von ein bis zwei Breiten des geprägten Dichtelementes beschichtet.

Als Beschichtungen eignen sich insbesondere solche, die einen oder mehrere der Stoffe FPM (Vinylidenfluorid-Hexafluorpropylen-Copolymer), Silikonkautschuk oder NBR-Kautschuk (Acryl-Butadien-Kautschuk), PUR (Polyurethan), NR (Naturkautschuk), FFKM (Perfluorkautschuk), SBR (Styrol-Butadien-Kautschuk), BR (Butylkautschuk), FVSQ (Fluorsilikon), CSM (chlorsulfoniertes Polyethylen), Silikonharz und/oder Epoxidharz enthalten oder aus einem oder mehreren dieser Stoffe bestehen. Üblicherweise wird die Beschichtung dabei nicht direkt auf die Metalloberfläche der Dichtungslagen aufgebracht. Stattdessen wird zur Verbesserung der Haftung der Beschichtung auf der Metalloberfläche eine Primerschicht vor Aufbringen der eigentlichen Beschichtung vorgesehen.

Im Hinblick auf den Einsatz auch bei hohen Drücken ist es vorteilhaft, wenn die erfindungsgemäße Flachdichtung genau zwei Dichtlagen zusätzlich zu einer Distanzlage aufweist. Die Distanzlage wird in diesem Fall zwischen den beiden Dichtlagen angeordnet. Die in der einen Dichtlage eingeprägten ersten Dichtelemente und die in der zweiten Dichtlage eingeprägten zweiten Dichtelemente bilden dann auf der von der Distanzlage wegweisenden Oberfläche der jeweiligen Dichtlage Dichtlinien, d.h. Begrenzungen zwischen den Strömungskanälen für eine Hydraulikflüssigkeit in den benachbarten Bauteilen aus. Bei derartigen Dichtelementen handelt es sich bevorzugt um in die Dichtlage eingeprägte Sicken, insbesondere U-förmige Vollsicken und Z-förmige Halbsicken. Die dicke Distanzlage entkoppelt die Sicken in den Dichtlagen.

Im Hinblick auf den Materialeinsatz ist es vorteilhaft, wenn die erfindungsgemäße Flachdichtung, beispielsweise eine Hydrauliksystemsteuerplatte, genau eine Dichtlage zusätzlich zu einer Distanzlage aufweist. Auch hier ist es möglich, auf beiden Seiten der Distanzlage Strömungskanäle für Hydraulikflüssigkeiten vorzusehen, beispielsweise indem auf der der Dichtlage abgewandten Oberfläche der Distanzlage Abdichtelemente, insbesondere elastomer- oder duroplastbasierte Polymerstränge auf- oder angebracht sind.

Eine derartige Distanzlage weist vorteilhafterweise eine größere Dicke auf als die benachbarten Dichtungslagen. Vorteilhafterweise entspricht die Dicke der Distanzlage mindestens dem Doppelten, bevorzugt mindestens dem Dreifachen, besonders bevorzugt mindestens dem Vierfachen der Dicke einer benachbarten Dichtlage. Es ist insbesondere bevorzugt, wenn die Distanzlage eine Dicke von mindestens 1 mm aufweist.

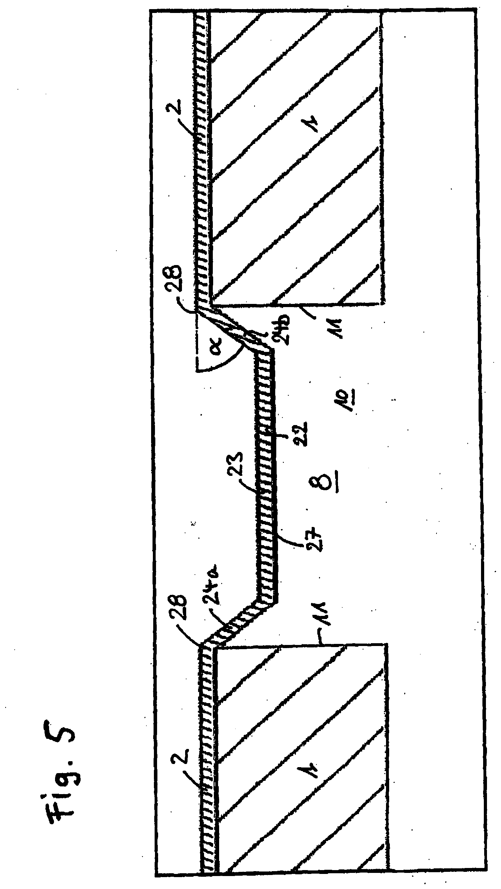

Erfindungsgemäß ist bei einer zweiten Dichtungslage, die benachbart zu einer ersten Lage angeordnet ist, eine freie Kante abgekröpft. Vorteilhafterweise weist die zweite Dichtungslage folglich einen aus der Ebene der zweiten Dichtungslage herausragenden Abschnitt auf, der mit einem spitzen Flankenwinkel (Flankenwinkel α in Figur 5) zwischen 10° und 60°, bevorzugt zwischen 10° und 40°, weiter bevorzugt zwischen 15°und 30 °oder weiter bevorzugt zwischen 10° und 25°, weiter bevorzugt zwischen 15° und 20° zur Ebene der Dichtungslage verläuft. An diesen gewinkelten Bereich schließt sich ein Bereich an, der wiederum parallel zur Ebene der zweiten Dichtungslage verläuft, so dass die Kante dieses letzteren Bereiches insgesamt gegenüber der Lagenebene der zweiten Dichtungslage abgekröpft ist.

Dadurch ist sichergestellt, dass im verbundenen Zustand der einzelnen Dichtungslagen die Abkröpfung der zweiten Dichtungslage so in den Bereich des Randes der ersten Dichtungslage hineinreicht, dass sie nicht über die dieser Dichtungslage abgewandte Oberfläche der ersten Dichtungslage übersteht.

Die erfindungsgemäße Verbindungsstelle weist vorzugsweise eine Ausdehnung von 2 bis 10 mm, vorzugsweise von 3,5 bis 7,5 mm bezogen auf ihre größte Erstreckungsrichtung auf. Es ist bevorzugt, wenn jede Dichtungslage über mehr als eine Verbindungsstelle mit der benachbarten Dichtungslage verbunden ist. Findet die Lagenverbindung an beiden Kanten eines Steges statt, so zählt dies als nur eine Verbindungsstelle. Für eine besonders stabile Befestigung verläuft die Ausrichtung der freien Kante der zweiten Dichtungslage und des Randes der ersten Dichtungslage dabei an der ersten Verbindungsstelle bevorzugt nicht parallel zu den entsprechenden Kanten an der zweiten Verbindungsstelle, sondern unter einem Winkel zueinander. Werden beispielsweise drei Verbindungsstellen eingesetzt, ist es bevorzugt, wenn die Kanten hier in einem Winkel von ungefähr 120° zwischen den freien Kanten der einzelnen Verbindungsstellen verlaufen. Bei vier Verbindungsstellen verlaufen die freien Kanten der Verbindungsstellen vorzugsweise in einem Winkel von ungefähr 90° zueinander. Generell ist ein Winkel zwischen den einzelnen freien Kanten der einzelnen Verbindungsstellen bei n Verbindungstellen von ungefähr 360°/n besonders bevorzugt. Abweichungen von z.B. 10 bis 20° sind problemlos möglich, z.B. wenn andere Anordnungen aus Platzgründen nicht möglich sind. Andererseits kann es für den Toleranzausgleich von Sicken auch bevorzugt sein, die Verbindungsstellen parallel anzuordnen.

In einer Ausführungsform der vorliegenden Erfindung weist die erste Lage, insbesondere eine Distanzlage, im Bereich der Verbindungsstelle eine bogenförmige Aussparung auf, wobei sich die Bogenform dadurch ergibt, dass sich ein eckenfreier Kopf (Stempel) über einen Verbindungssteg aus der ersten Lage fortsetzt. Der Rand des eckenfreien Kopfs dient dabei als Rand der ersten Lage, der die freie Kante der zweiten Lage, beispielsweise einer Dichtlage, übergreift.

Eine derartige Ausführungsform stellt eine erfindungsgemäße Verbindung dar. Vorteilhafterweise kann die erste Lage, insbesondere die Distanzlage jedoch gerade keine derartige bogenförmige Aussparung aufweisen, deren Bogenform sich dadurch ergibt, dass ein eckenfreier Kopf/Stempel sich über einen Verbindungssteg aus der ersten Lage fortsetzt.

Im Folgenden werden einige erfindungsgemäße Beispiele für eine Flachdichtung nach der vorliegenden Erfindung und ein Herstellungsverfahren hierfür gegeben. Die einzelnen Merkmale der jeweiligen Beispiele können dabei nicht nur im Verbund mit sämtlichen anderen Merkmalen des jeweiligen Beispiels realisiert werden, sondern können auch als einzelnes Merkmal eine einzelne Weiterbildung der vorliegenden Erfindung darstellen, ohne die anderen nicht im Anspruch 1 enthaltenen Merkmale des Beispiels zu verwirklichen. Im Folgenden werden für gleiche oder ähnliche Elemente gleiche oder ähnliche Bezugszeichen verwendet, so dass teilweise deren Darstellung nicht wiederholt wird. Die Figuren sind teilweise mit einem Rand dargestellt, der jedoch für die Erfindung keine Bedeutung hat.

Es zeigen
- Figur 1: eine Getriebesteuerplatte;
- Figur 2: eine erste Lage im Bereich einer Verbindungsstelle nach einem ersten Beispiel;
- Figur 3: eine zweite Lage im Bereich einer Verbindungsstelle nach dem ersten Beispiel;
- Figur 4: eine Aufsicht/Durchsicht auf übereinanderliegende erste und zweite Lagen gemäß den Figuren 2 und 3 im noch nicht verbundenen Zustand;
- Figur 5: einen Querschnitt durch eine Verbindungsstelle längs der Linie A-A in Figur 4;
- Figur 6: einen Querschnitt durch eine Verbindungsstelle längs der Linie B-B in Figur 4;
- Figur 7: einen Querschnitt durch eine Verbindungsstelle längs der Linie B-B in Figur 4 nach dem erfindungsgemäßen Verbinden der ersten und der zweiten Lage;
- Figur 8: eine Aufsicht/Durchsicht auf übereinanderliegende erste und zweite Lagen gemäß der Figur 7 nach Verbinden der ersten und zweiten Lage;
- Figur 9: einen Querschnitt durch eine Verbindungsstelle nach einem zweiten Beispiel vor dem Verbinden;
- Figur 10: einen weiteren Querschnitt durch eine Verbindungsstelle nach dem zweiten Beispiel vor dem Verbinden;
- Figur 11: einen weiteren Querschnitt durch eine Verbindungsstelle nach dem zweiten Beispiel nach dem Verbinden einer ersten Lage, einer zweiten Lage und einer dritten Lage;
- Figur 12: einen Querschnitt durch eine Verbindungsstelle nach einem dritten Beispiel vor dem Verbinden;
- Figur 13: einen Querschnitt durch eine Verbindungsstelle nach dem dritten Beispiel vor dem Verbinden;
- Figur 14: einen Querschnitt durch eine Verbindungsstelle nach dem dritten Beispiel nach dem Verbinden einer ersten Lage und einer zweiten Lage;
- Figur 15: eine Aufsicht/Durchsicht durch eine Verbindungsstelle nach einem vierten Beispiel;
- Figur 16: eine Aufsicht/Durchsicht auf eine Verbindungsstelle nach einem fünften Beispiel;
- Figur 17: eine Aufsicht auf den Bereich einer Verbindungsstelle einer ersten Lage nach einem sechsten Beispiel;
- Figur 18: eine Aufsicht auf den Bereich einer Verbindungsstelle einer zweiten Lage nach dem sechsten Beispiel;
- Figur 19: eine Aufsicht/Durchsicht auf die erste und die zweite Lage einer Verbindungsstelle nach dem sechsten Beispiel;
- Figur 20: einen Querschnitt durch eine Verbindungsstelle nach dem sechsten Beispiel;
- Figur 21: einen Querschnitt durch eine Verbindungsstelle nach dem Verbinden einer ersten und einer zweiten Lage nach dem sechsten Beispiel;
- Figur 22: eine Aufsicht/Durchsicht auf eine Verbindungsstelle nach dem Verbinden nach dem sechsten Beispiel;
- Figur 23: eine Aufsicht/Durchsicht auf einen Ausschnitt einer Getriebesteuerplatte nach einem siebten Beispiel;
- Figur 24: vier verschiedene beispielhafte Möglichkeiten, den Bereich der Verbindungsstelle einer zweiten Lage zu gestalten;
- Figur 25: einen Querschnitt durch eine Verbindungsstelle nach dem Verbinden von vier Lagen nach einem achten Beispiel;
- Figur 26: eine Aufsicht/Durchsicht auf die erste und die zweite Lage einer Verbindungsstelle vor dem Verbinden nach einem neunten Beispiel;
- Figur 27: eine Aufsicht/Durchsicht auf einen Bereich einer Getriebesteuerplatte nach einem zehnten Beispiel;
- Figur 28: in zwei Teilbildern Detailaufsichten auf Verbindungsstellen gemäß dem zehnten Beispiel;
- Figur 29: eine Draufsicht auf eine Verbindungsstelle nach einem elften Beispiel;
- Figur 30: in einem zwölften Beispiel drei verschiedene beispielhafte Gestaltungsmöglichkeiten für Verbindungsstellen im Querschnitt;
- Figur 31: eine Schnittansicht einer Verbindungsstelle nach einem dreizehnten Beispiel;
- Figur 32: eine Draufsicht auf eine Verbindungsstelle nach einem vierzehnten Beispiel;
- Figur 33: einen Querschnitt durch einen beispielhaft beschichteten, gesickten Bereich einer Dichtlage einer erfindungsgemäßen Hydrauliksystemsteuerplatte/Getriebesteuerplatte als fünfzehntes Beispiel;
- Figur 34: eine Schnittansicht einer Verbindungsstelle nach einem sechzehnten Beispiel; und
- Figur 35: eine Schnittansicht einer Verbindungsstelle nach einem siebzehnten Beispiel.

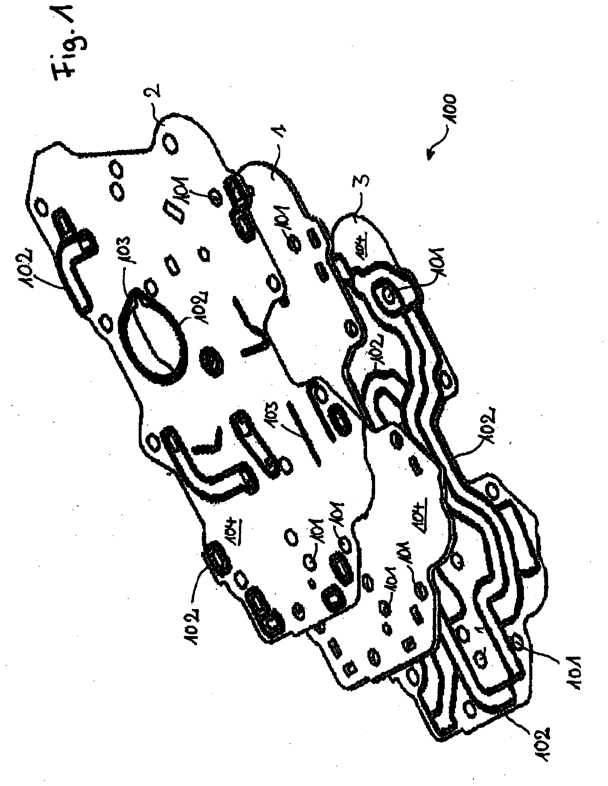

Figur 1 zeigt eine Explosionszeichnung einer dreilagige Getriebesteuerplatte 100, wie sie insbesondere bei Kraftfahrzeuggetrieben eingesetzt wird zur Steuerung der Hydraulik. Derartige Getriebesteuerplatten besitzen zugleich eine abdichtende Funktion und sind daher als Flachdichtungen ausgestaltet.

Die in Figur 1 dargestellte Getriebesteuerplatte 100 weist drei Lagen auf. Als mittlere Lage ist eine Distanzlage 1 vorgesehen, zu der benachbart eine erste Dichtlage 2 und eine zweite Dichtlage 3 angeordnet sind. Eine Distanzlage weist gewöhnlich eine erheblich größere Dicke auf als die benachbarten Dichtlagen. Figur 1 stellt die Getriebesteuerplatte 100 im nicht montierten Zustand mit voneinander gelösten Lagen 1, 2 und 3 dar.

Die einzelnen Lagen der Getriebesteuerplatte 100 weisen Durchgangsöffnungen 101 für ein Hydraulikfluid auf. Auf den der Distanzlage 1 zugewandten Seiten und auch auf den der Distanzlage 1 abgewandten Seiten der Dichtlagen 2 und 3 sind Dichtelemente 102, die teilweise mit einer Beschichtung 103 versehen sind, vorgesehen, die zur Führung des Hydraulikfluids dienen. Derartige Dichtelemente können beispielsweise Sicken (Vollsicken oder auch Halbsicken) oder auch elastomere Beschichtungen sein. Zwischen diesen Dichtelemente 102 bzw. 103 sind auf den einzelnen Lagen der Getriebesteuerplatte 100 auch unbeschichtete Bereiche 104 vorgesehen.

Die einzelnen Lagen der Getriebesteuerplatte 100 sind über Verbindungsstellen miteinander so verbunden, dass die Getriebesteuerplatte als Einheit transportiert und gehandhabt werden kann. Im eingebauten Zustand besitzen diese Verbindungsstellen eine geringe Bedeutung, da die Getriebesteuerplatte dann zwischen zwei Bauelementen, zwischen denen durch die Getriebesteuerplatte 100 abgedichtet und Hydraulikfluid gezielt geleitet wird, hinreichend festgehalten wird.

Die folgenden Beispiele werden anhand einer Getriebesteuerplatte erläutert, sie sind jedoch ohne weiteres unmittelbar auch auf andere Flachdichtungen, wie beispielsweise Zylinderkopfdichtungen oder Auspuffkrümmerdichtungen übertragbar, die ebenfalls einen mehrlagigen Aufbau, oftmals mit Distanzlage und einer oder mehreren Dichtlagen aufweisen.

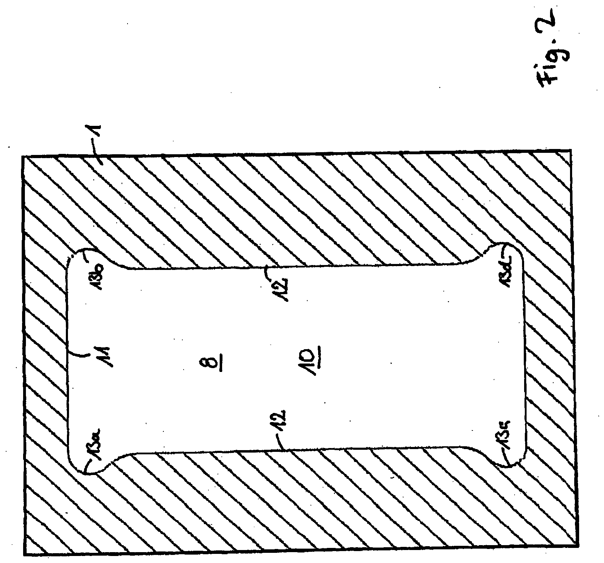

Figur 2 zeigt eine Aufsicht auf eine Trägerlage 1 als erste Lage im Bereich einer Verbindungsstelle nach einem ersten erfindungsgemäßen Beispiel. In Figur 2 ist dabei lediglich der Ausschnitt um eine Verbindungsstelle 8 dargestellt.

Die Trägerlage bzw. Distanzlage 1 weist im Bereich der Verbindungsstelle 8 eine Ausnehmung 10 auf, die im vorliegenden Beispiel weitgehend einem Rechteck entspricht. Lediglich an den vier Ecken des Rechtecks weisen die beiden Längsseiten (längeren Seiten) Ausklinkungen 13a, 13b, 13c und 13d auf.

Die Aussparung 10 in der Lage 1 weist einen Rand 11 auf, der an den Längsseiten etwa mittig der Längsseiten mit dem Bezugszeichen 12 versehen ist. Wie später dargestellt wird, wird dieser Bereich 12 des Außenrandes der Aussparung 10 zur Verbindung mit benachbarten Lagen zumindest teilweise verpresst.

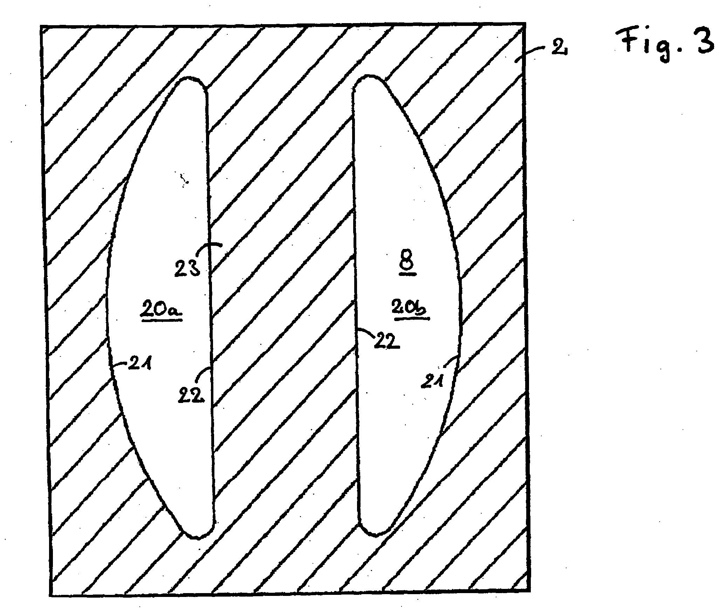

Figur 3 zeigt eine Aufsicht auf eine Dichtlage 2 als zweiter Lage nach demselben Ausführungsbeispiel. Dabei ist derselbe Ausschnitt um die Verbindungsstelle 8 wie in Figur 2 dargestellt.

Die Dichtlage 2 weist im Bereich der Verbindungsstelle 8 Aussparungen 20a und 20b auf, die ihrerseits über einen Steg 23 voneinander getrennt sind. In einer anderen Betrachtungsweise weist die Dichtlage 2 eine Aussparung auf, durch die sich von einer Seite der Dichtlage 2 zur anderen Seite der Dichtlage 2 ein Steg 23 erstreckt und die Aussparung in zwei Teile 20a und 20b unterteilt.

Die Aussparungen 20a und 20b weisen jeweils eine Außenkante 21 auf, die im Bereich des mittleren Abschnitts, in dem die Kante 21 längs des Steges 23 verläuft, jeweils mit dem Bezugszeichen 22 versehen ist. Wie später dargestellt wird, dienen diese Bereiche 22 als freie Kante zur Verbindung der Dichtlage 2 mit der Distanzlage 1.

Bei einer Getriebesteuerplatte 100, wie sie in Figur 1 dargestellt ist, kann auch die zweite Dichtlage 3 ähnlich ausgebildet sein, um ebenfalls Verbindungsstellen zur Distanzlage 1 zur Verfügung zu stellen.

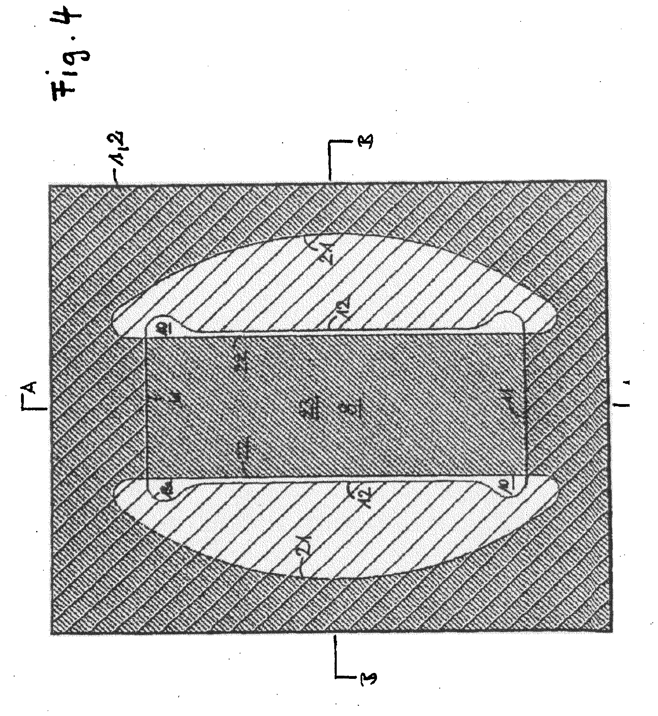

Figur 4 zeigt nun eine Aufsicht/Durchsicht durch die Lagen 1 und 2, wenn diese in korrekter Position übereinander angeordnet sind. Dabei ist jedoch noch keine Verbindung zwischen den Lagen 1 und 2 hergestellt. Der von links oben nach rechts unten schraffierte Bereich stellt die Distanzlage 1 dar, während der von rechts oben nach links unten feiner schraffierte Bereich die Dichtlage 2 darstellt.

Es ist zu erkennen, dass in diesem Ausführungsbeispiel der Steg 23 eine geringere Breite aufweist als die lichte Weite der Ausnehmung 10 in der Distanzlage 1 im Bereich des Randes 12. Dadurch ist es möglich, den Steg 23 in die Ausnehmung 10 einzupressen.

Figur 5 zeigt nun einen Querschnitt längs der Linie A-A in Figur 4 noch vor Verbindung der beiden Lagen miteinander. In Figur 5 ist der Steg 23 nun bereits in die Aussparung 10 der Lage 1 eingepresst, so dass seine Außenkante 22 benachbart zu dem Rand 11 der Lage 1 innerhalb der Lagendicke der ersten Lage 1 verläuft. Hierzu ist die Lage 2 im Bereich der Aussparung 10 mit Abkröpfungen 24a, 24b versehen, die an einer Knickstelle 28 beginnend einen unter einem schrägen Winkel α gegenüber der Lagenebene der Lage 2 verlaufenden Bereich bilden, während der zentrale Bereich 27 der freien Kante 22 zwischen den Abkröpfungen 24a, 24b sich parallel zur Lagenebene erstreckt.

In Figur 4 in Kombination mit Figuren 2 und 5 ist zu erkennen, dass die Ränder 11 mittels Ausklinkungen 13a, 13b, 13c und 13d geradlinig verlängert sind, um ausreichend Platz zur Verfügung zu stellen und Spanbildung beim Abkröpfen zu verhindern.

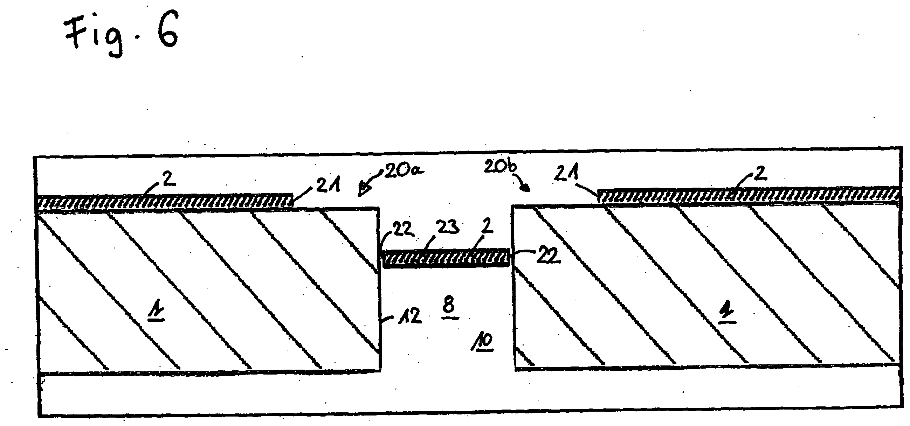

Figur 6 ist ein Querschnitt durch die Lage 1 und die Lage 2 längs der Linie B-B in Figur 4 noch vor Verbindung der beiden Lagen miteinander. Der Steg 23 der Dichtlage 2 verläuft in diesem Bereich innerhalb der Lagendicke der ersten Lage 1.

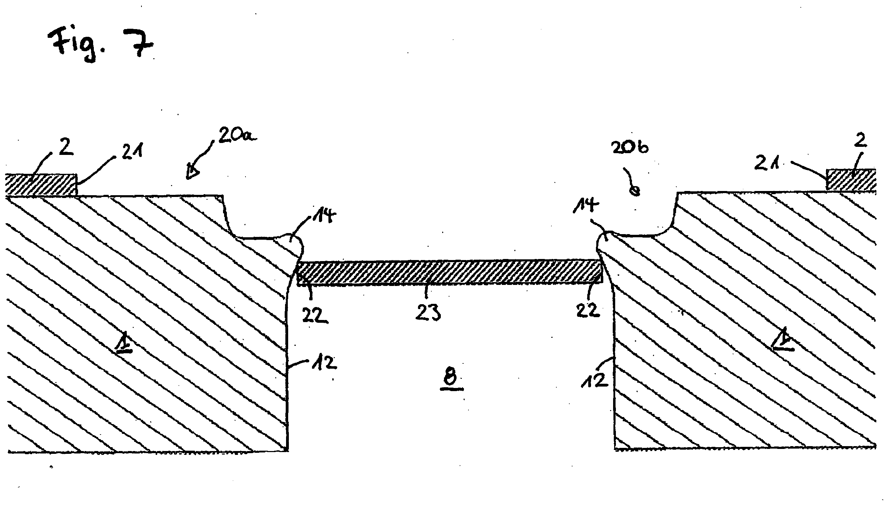

Figur 7 zeigt denselben Querschnitt wie in Figur 6, nunmehr jedoch nach Verbindung der Lagen 1 und 2 zu einer erfindungsgemäßen Flachdichtung. Hierzu ist der Bereich des Randes 12 oberhalb des Steges 23 derart verpresst, dass sich vorteilhafterweise Nasen 14 ausbilden, die den Steg 23 an dessen freien Kanten 22 übergreifen. Damit ergibt sich ein Formschluss zwischen den Nasen 14 und den freien Kanten 22 des Steges 23 in zur Lagenebene senkrechter Richtung, der ein Lösen der Lage 2 von der Distanzlage 1 verhindert. Damit sind die beiden Lagen 1 und 2 hinreichend für einen Transport miteinander verbunden.

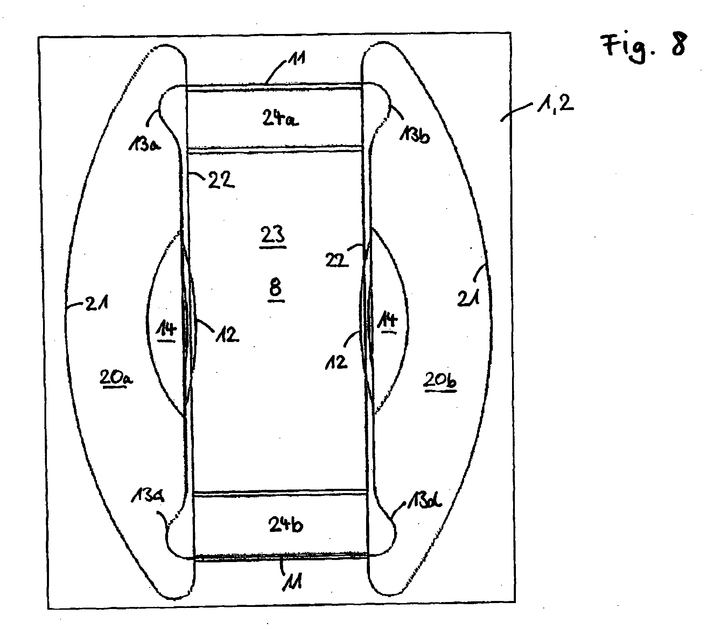

Figur 8 zeigt nochmals eine Aufsicht/Durchsicht durch die übereinanderliegenden Lagen 1, 2 im verbundenen Zustand.

Im mittleren Bereich der freien Kanten 22 des Steges 23 der Dichtlage 2 wurde das Material der Distanzlage 1 mittels eines konzentrischen Stempels derart verpresst, dass der Rand 12 der Distanzlage 1 nunmehr die freien Kanten 22 übergreift. In einer Ausführungsform kann derselbe Werkzeugstempel bei geeigneter Gestaltung zur Verformung und Abkröpfung des Stegs 23 der Dichtlage 2 und anschließend zur Verpressung des Randes 12 der Distanzlage 1 verwendet werden.

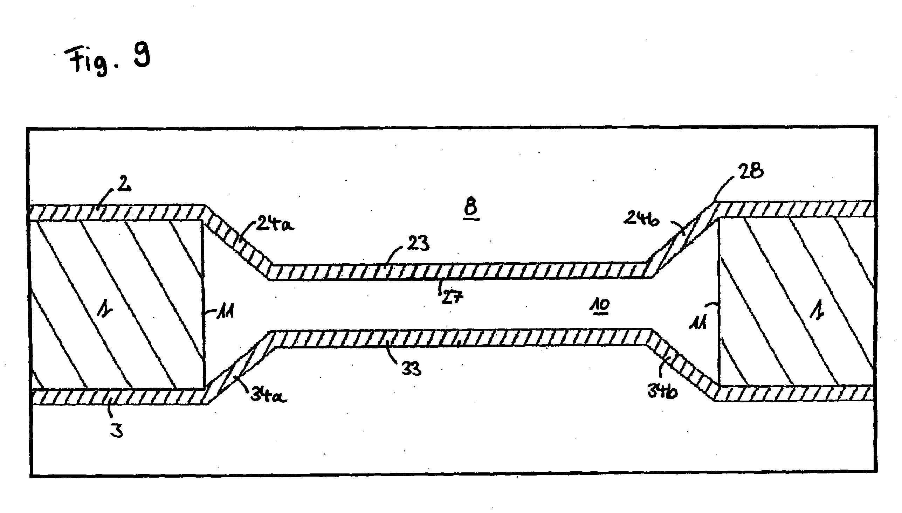

Figur 9 zeigt ein zweites Ausführungsbeispiel der vorliegenden Erfindung für eine Verbindungsstelle 8 in noch nicht verbundenem Zustand. Ergänzend zum ersten Ausführungsbeispiel ist neben der Distanzlage 1 und der ersten Dichtlage 2 nunmehr auf der der ersten Dichtlage 2 gegenüberliegenden Seite der Distanzlage 1 eine zweite Dichtlage 3 vorgesehen, die im Bereich der Verbindungsstelle 8 in spiegelsymmetrischer Weise zur Dichtlage 2 ausgebildet ist. Figur 9 stellt einen Querschnitt wie in Figur 5 dar. Die Dichtlage 3 weist ebenso symmetrisch zu den Abkröpfungen 24a und 24b Abkröpfungen 34a und 34b auf, so dass innerhalb der Ausnehmung 10 der Distanzlage 1 die Dichtlage 3 einen Steg 33 ausbildet.

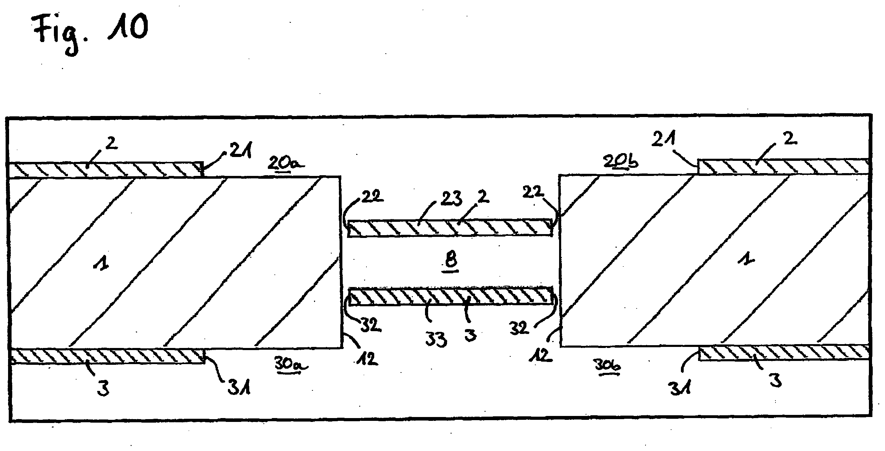

Figur 10 zeigt einen Querschnitt wie in Figur 6 im noch nicht verbundenen Zustand, nunmehr jedoch für das zweite Ausführungsbeispiel. Die Dichtlage 3 weist Aussparungen 30a, 30b (entsprechend den Aussparungen 20a, 20b in der Lage 2), Außenkanten 31 der Aussparungen 30a, 30b und einen Steg 33 mit freien Kanten 32 auf, der symmetrisch zum Steg 23 der Dichtlage 2 ausgebildet und angeordnet ist.

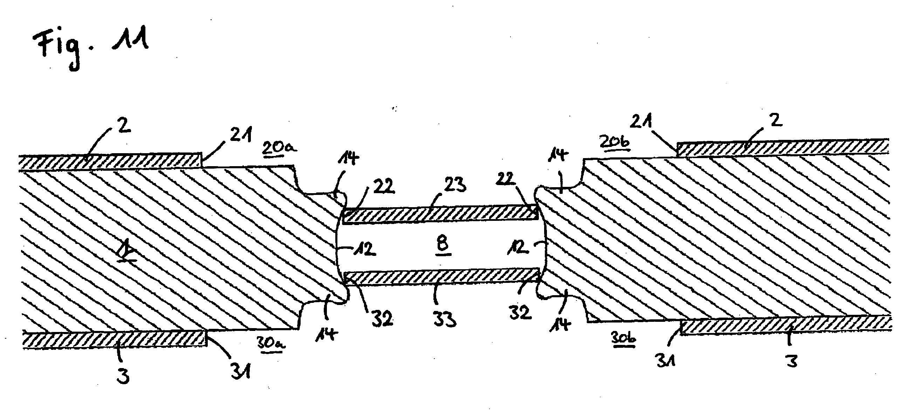

Figur 11 zeigt einen Querschnitt durch eine Verbindungsstelle 8 wie in Figur 7 im verbundenen Zustand, nunmehr jedoch für das zweite Ausführungsbeispiel. Die Distanzlage 1 ist im Bereich ihres Randes 12 nunmehr nicht nur oberhalb des Steges 23 unter Ausbildung von Nasen 14 verformt, sondern auch unterhalb des Steges 33 der Dichtlage 3. Die Nasen 14 übergreifen daher nunmehr außenseitig die Stege 23 und 33 und verbinden so die Dichtlagen 2 bzw. 3 mit der Distanzlage 1 zu einer dreilagigen Flachdichtung. Bei dieser Anordnung der Verbindungsstelle zwischen Lagen 1 und 2 und der Verbindungsstelle zwischen Lagen 1 und 3 übereinander ist die Flachdichtung in diesem Bereich nicht fluiddicht. Es können jedoch außerhalb der Verbindungsstelle in den Lagen 2 und 3 Dichtelemente vorgesehen werden, die die Verbindungsstelle 8 umgeben.

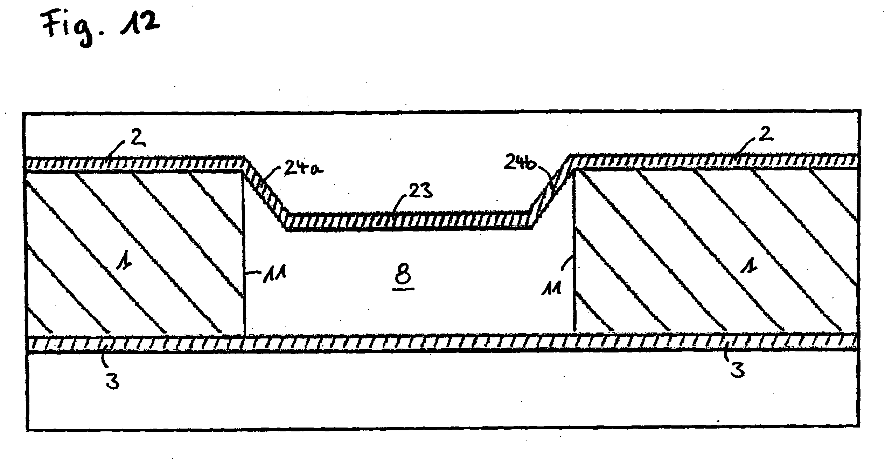

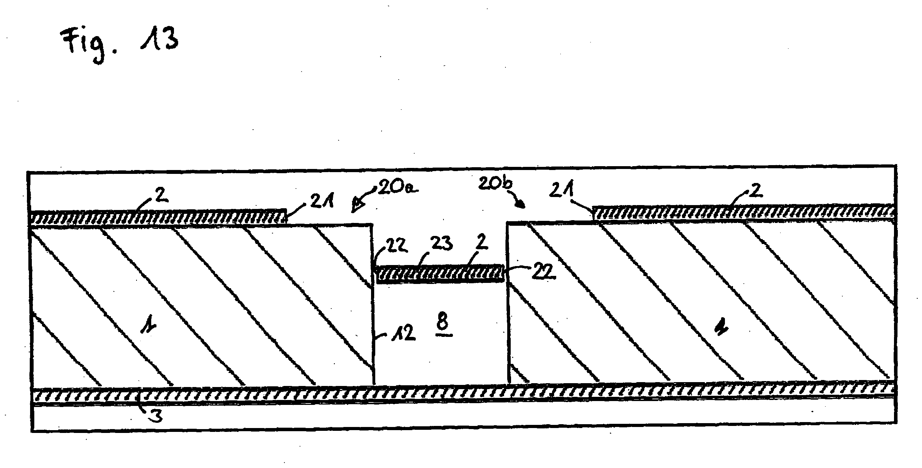

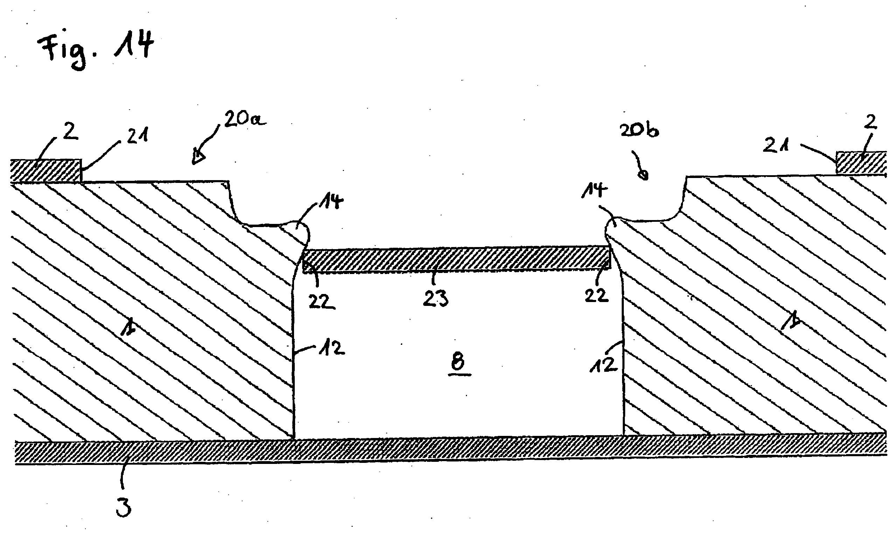

Figur 12 zeigt einen Querschnitt wie in Figur 9, nunmehr jedoch für ein drittes Ausführungsbeispiel. In diesem Ausführungsbeispiel ist die Dichtlage 3 nicht wie in Figur 9 gestaltet, sondern weist weder Aussparungen noch einen Steg auf. Lediglich die Dichtlage 2 ist an dieser Stelle erfindungsgemäß mit der Distanzlage 1 verbunden. Dies zeigen die Querschnitte in Figur 13 und in Figur 14, die den Darstellungen in Figur 10 und Figur 11 entsprechen, jedoch ohne die entsprechende Ausgestaltung der Dichtlage 3. Die Dichtlage 3 kann vorteilhafterweise in erfindungsgemäßer Weise an anderen Stellen der Distanzlage 1 mit der Distanzlage 1 verbunden sein. Hierdurch ist es dann möglich, alle drei Lagen 1, 2 und 3 zu einer miteinander verbundenen Flachdichtung zu verbinden. Vorteilhaft ist bei einem derartigen Versatz der Verbindungsstellen in der Lagenebene, dass beispielsweise die in Figur 14 dargestellte Verbindungsstelle 8 durch die durchgehende Dichtlage 3 in senkrechter Weise, d.h. senkrecht zur Lagenebene der Distanzlage 1 fluiddicht ist. Bei dem zweiten Ausführungsbeispiel, das in Figur 11 dargestellt ist, ist die Verbindungsstelle 8 nicht

in Querrichtung zur Lagenebene der Distanzlage 1 fluiddicht, da hier Fluid im Bereich der Kröpfungen 24a und 24b sowie der Ausklinkungen 13a bis 13d von einer Seite der Flachdichtung zur anderen Seite der Flachdichtung fließen kann.

Vorteilhaft bei allen diesen erfindungsgemäßen Verbindungsstellen 8 ist, dass diese im Gegensatz zu beispielsweise Nieten zu keiner Aufdickung der Flachdichtung führen. Dadurch ist es möglich, diese Verbindungsstellen auch im Verpressungsbereich der Flachdichtung vorzusehen.

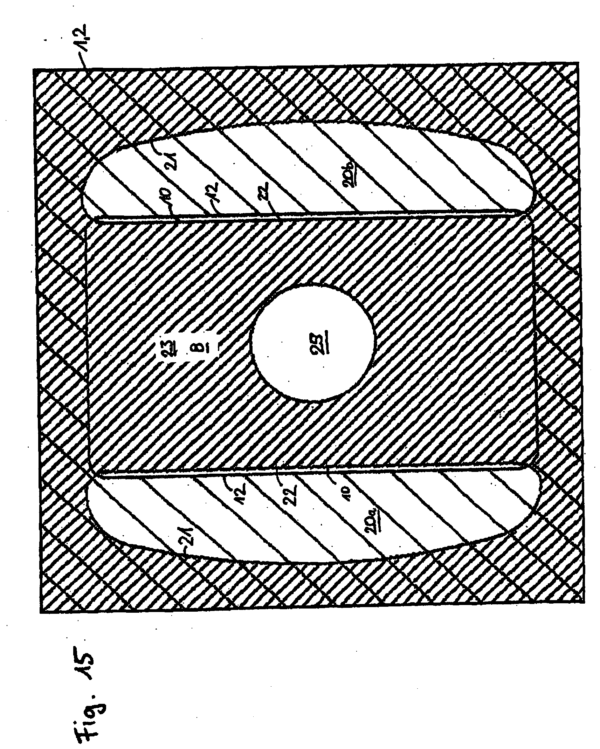

Figur 15 zeigt eine Verbindungsstelle 8 einer vierten Ausführungsform in Aufsicht/Durchsicht durch die Distanzlage 1 und die Dichtlage 2 in ähnlicher Darstellung wie Fig. 4 im noch nicht verbundenen Zustand. Die Distanzlage 1 ist mit Schraffur von rechts oben nach links unten dargestellt, während die Dichtlage 2 mit einer engeren Schraffur von links oben nach rechts unten versehen ist. Die Aussparung 10 weist keine Ausklinkungen an ihren Ecken auf. Der Steg 23 weist nunmehr mittig eine Durchbrechung/Öffnung 25 auf, die vorteilhafterweise kreisrund ausgebildet ist. An dieser Öffnung 25 können Werkzeuge, z.B. für die Verbindung der Lagen, zentriert werden.

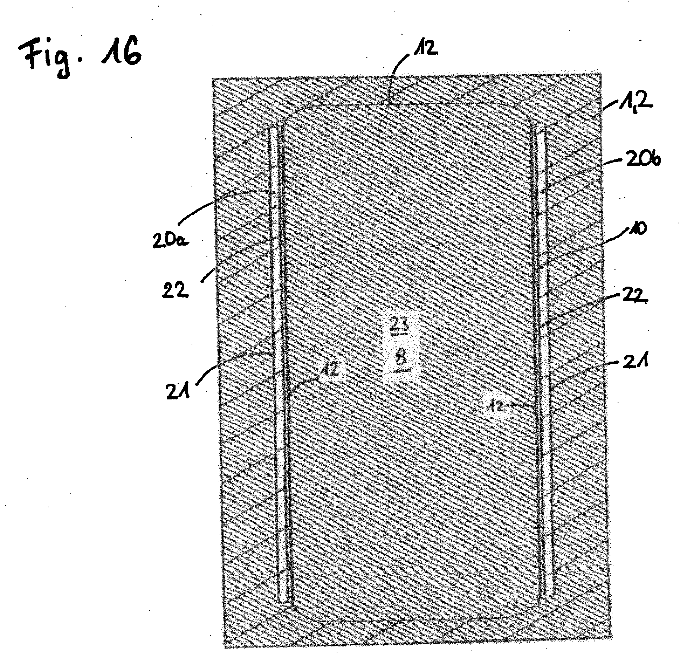

Figur 16 zeigt eine Aufsicht/Durchsicht auf eine Verbindungsstelle 8 eines fünften Ausführungsbeispiels. In diesem Ausführungsbeispiel ist die Distanzlage 1 mit einer Schraffur von rechts oben nach links unten und die Dichtlage 2 mit einer engeren Schraffur von links oben nach rechts unten dargestellt. Wie in Figur 15 weist nunmehr die Distanzlage 1 keine Ausklinkungen 13a bis 13d auf, die lediglich ein für sich isoliertes und optionales Merkmal der Erfindung darstellen können.

Im fünften Ausführungsbeispiel ist weiterhin der Steg 23 geringfügig breiter als die entsprechende lichte Weite der Aussparung 10 in der Distanzlage 1. Im unverpressten Zustand ragt folglich der Steg 23 über den Rand 12 der Distanzlage 1. Beim Verpressen und anschließenden Verbinden der beiden Lagen 1 und 2 wird jedoch der Steg in die Aussparung 10 eingedrückt, so dass sich letztendlich eine ähnliche Verbindung wie in den vorigen Ausführungsbeispielen ergibt.

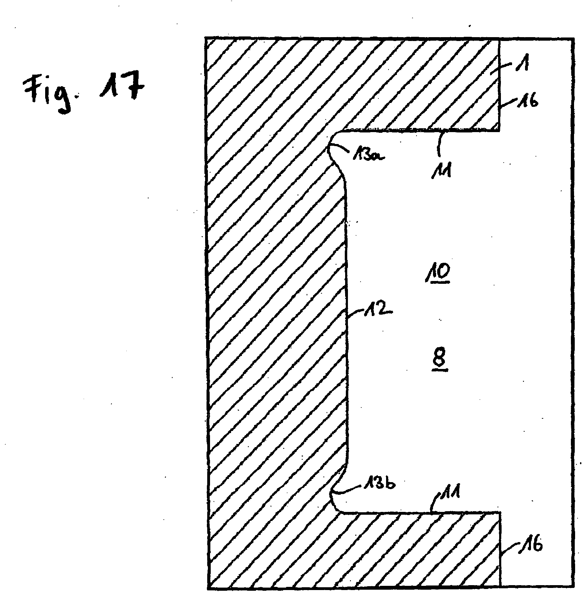

Figur 17 zeigt eine Aufsicht auf eine Distanzlage 1 in einem sechsten Ausführungsbeispiel im Bereich einer Verbindungsstelle 8. Die Aussparung 10 ist nunmehr an einer Außenkante 16 der Distanzlage 1 vorgesehen, so dass sich lediglich ein Rand 12 ergibt. Im Vergleich mit Figur 2 ist zu erkennen, dass das sechste Ausführungsbeispiel eine Verbindung am linken Rand 12 in Figur 2 zur Verfügung stellt und quasi ein "halbe" Verbindungsstelle 8 wie in Figur 2 darstellt.

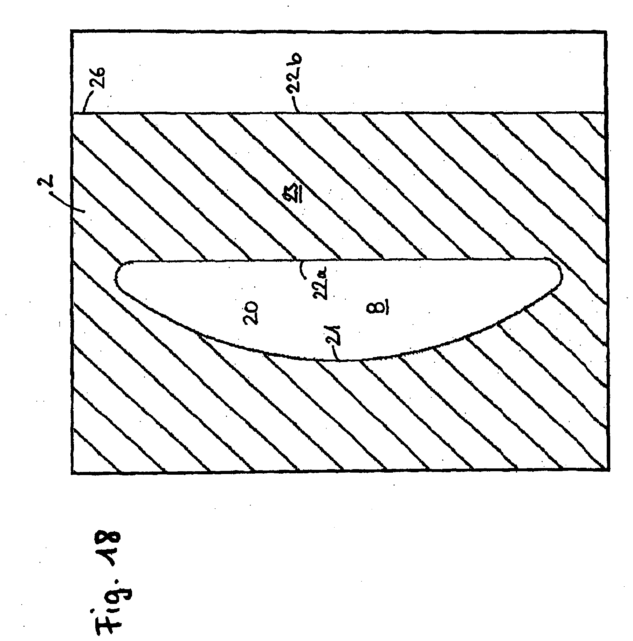

Figur 18 zeigt eine Aufsicht auf eine zweite Lage im Bereich einer Verbindungsstelle 8, beispielsweise eine Dichtlage 2 in dem sechsten Ausführungsbeispiel. Diese Dichtlage 2 weist nunmehr lediglich eine Aussparung 20 auf, die einen Außenrand 21 aufweist. Der Außenrand 21 bildet in dem mit dem Bezugszeichen 22a bezeichneten Bereich eine freie Kante, die zur Verbindung mit der Distanzlage 1 vorgesehen ist. Zugleich bildet diese freie Kante 22a gemeinsam mit dem Bereich 22b der Außenkante 26 der Dichtlage 2 einen Steg 23 aus.

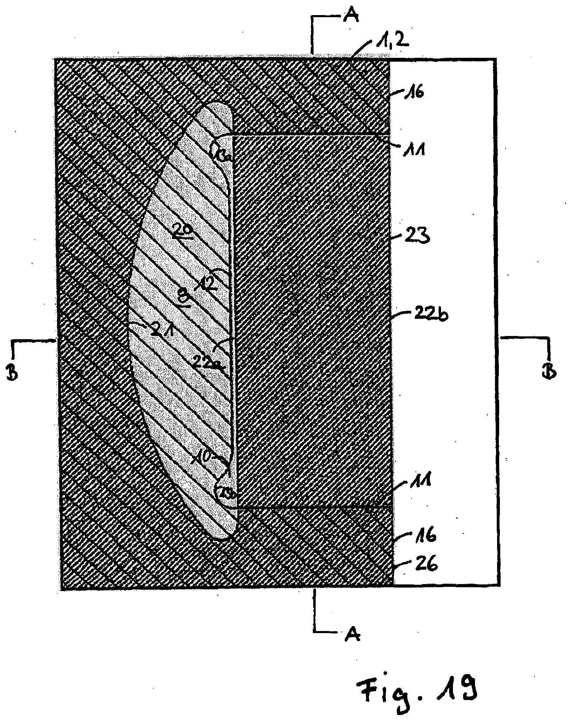

Figur 19 zeigt nun eine Aufsicht/Durchsicht durch die übereinander gelegten Lagen 1 und 2 des sechsten Ausführungsbeispiels im noch nicht verbundenen Zustand. Die freie Kante 22a des Steges 23 ist nun dem Rand 12 der Aussparung 10 in der Distanzlage 1 benachbart.

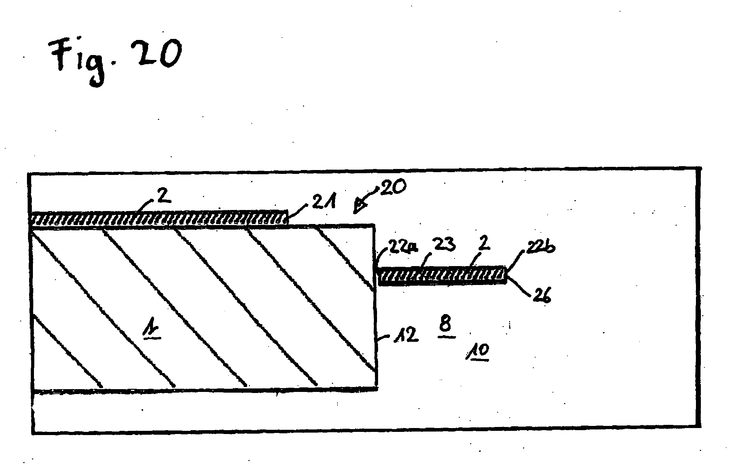

Figur 20 ist ein Querschnitt durch die beiden Lagen 1 und 2 längs der Linie B-B in Figur 19 im noch nicht verbundenen Zustand. Dabei ist der Steg 23 bereits derart abgekröpft, dass er im Bereich seiner freien Kante 22 benachbart zu der Distanzlage 1 innerhalb der Dicke der Distanzlage 1 verläuft.

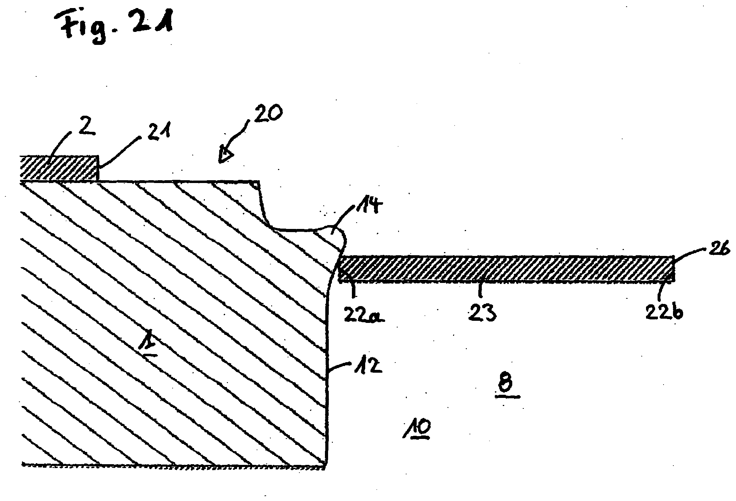

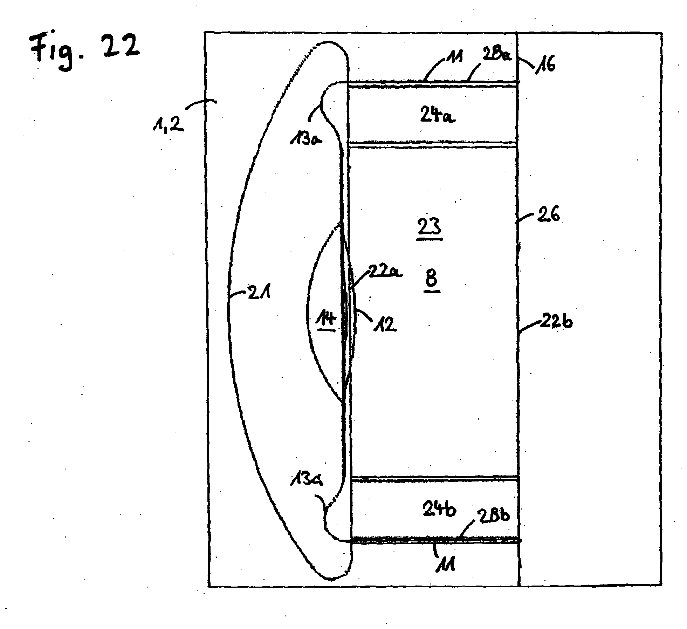

Während die Figuren 17 bis 20 die beiden Lagen 1 und 2 im noch unverbundenen Zustand darstellen, zeigt Figur 21 und auch Figur 22 den Bereich der Verbindungsstelle der erfindungsgemäßen Flachdichtung nach dem sechsten Beispiel im verbundenen Zustand. Figur 21 zeigt dabei einen Querschnitt entsprechend Figur 20, wobei hier jedoch zusätzlich zur Abkröpfung des Steges 23 der Rand 12 der Distanzlage 1 derart verpresst ist, dass das Material unter Ausbildung einer Nase 14 verfließt und den Steg 23 im Bereich der freien Kante 22 übergreift. Hierdurch ergibt sich ein Formschluss zwischen der Distanzlage 1 und der Dichtlage 2, der eine Bewegung der Dichtlage 2 senkrecht zur Distanzlage 1 verhindert.

Werden derartige Verbindungsstellen in größerer Zahl zwischen der Distanzlage 1 und der Dichtlage 2 vorgesehen, so kann der Verbund aus Distanzlage 1 und Dichtlage 2 stabil aneinander befestigt werden. Sind die Stege 23 der verschiedenen Verbindungsstellen zumindest teilweise in ihrer Orientierung gegeneinander gedreht, beispielsweise an verschiedenen Seiten der Flachdichtung, so erfolgt auch eine Sicherung der Dichtlage 2 gegen eine seitliche Bewegung gegenüber der Distanzlage 1. Damit kann also die Dichtlage 2 gegenüber der Distanzlage 1 vollständig fixiert werden.

Figur 22 zeigt eine Aufsicht/Durchsicht durch die Lagen 1 und 2 im verbundenen Zustand im Bereich einer Verbindungsstelle 8. Hier ist zu erkennen, dass im Bereich der Nase 14 der Rand 12 der Distanzlage 1 den Steg 23 im Bereich der freien Kante 22 übergreift. Die beiden Außenkanten 16 und 26 bilden hier gemeinsam eine durchgehende, vorteilhafterweise versatzfreie Außenkante der Flachdichtung.

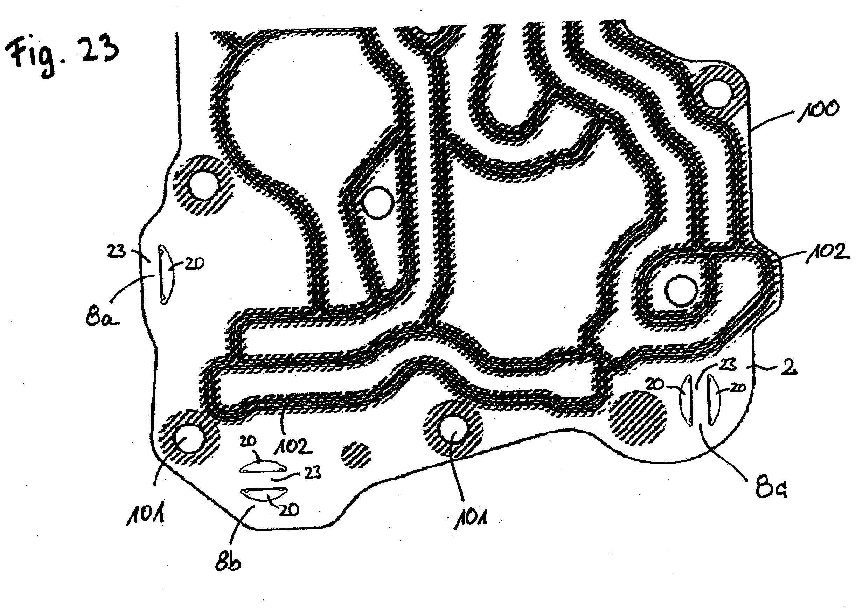

Figur 23 zeigt einen Ausschnitt aus einer Getriebesteuerplatte 100 in einem siebten Ausführungsbeispiel. In dieser Aufsicht auf die obenliegende Dichtlage 2 sind verschiedene Verbindungsstellen 8a, 8b und 8c zu erkennen. In Durchsicht durch die Ausnehmungen 20 sind die darunterliegenden Bereiche einer Distanzlage zu erkennen.

Die Verbindungsstelle 8a ist wie in dem sechsten Beispiel ausgestaltet, während die Verbindungsstellen 8b und 8c wie die Verbindungsstelle des ersten Beispiels ausgestaltet sind. Die Orientierungen der Stege 23 der beiden Verbindungsstellen 8b und 8c sind senkrecht zueinander, so dass die beiden Verbindungsstellen 8b und 8c nicht nur einen Formschluss in zur Ebene der Lage 2 senkrechten Richtung, sondern auch einen Formschluss in beide kartesischen Koordinaten innerhalb der Lagenebene der Dichtlage 2 und damit der Getriebesteuerplatte 100 herstellen. Damit können die Lagen 1 und 2 nicht mehr gegeneinander verschoben werden oder verrutschen.

Da die Lagen der Getriebesteuerplatte 100 durch diese beiden Verbindungsstellen 8b und 8c bereits gegen ein seitliches Verschieben gesichert sind, genügt es an weiteren Verbindungsstellen, beispielsweise an der Verbindungsstelle 8a lediglich eine in senkrecht zur Lagenebene wirkende Verbindung, beispielsweise durch eine Verbindungsstelle wie nach dem sechsten Beispiel vorzusehen.

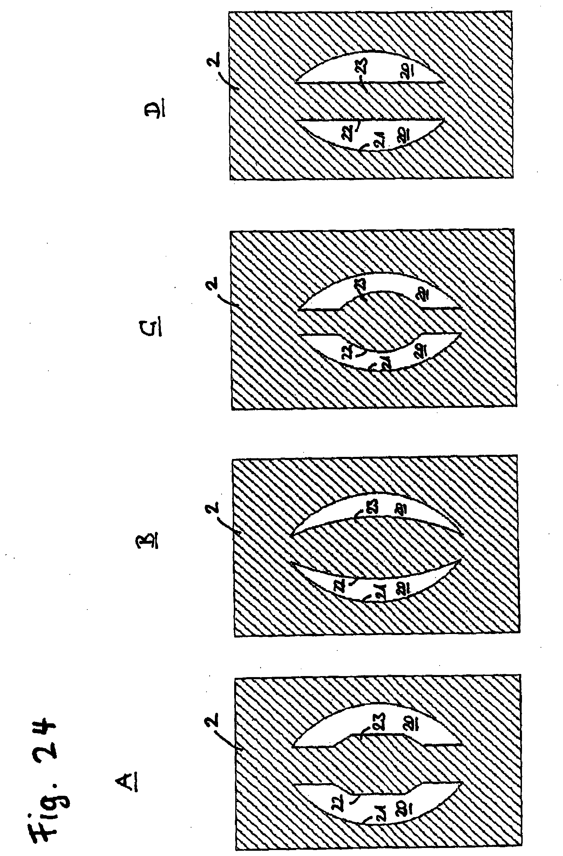

In Figur 24 sind für weitere Ausführungsbeispiele verschiedene Gestakungsmöglichkeiten für den Steg 23 und die Ausnehmung 20 dargestellt. Der Steg 23 kann beispielsweise wie in Figur 24-a in der Mitte im Bereich der freien Kante 22 verbreitert sein. Eine ähnliche Verbreiterung ist in Figur 24-b oder auch in Figur 24-c dargestellt. Eine gerade Ausgestaltung des Steges 23 ist in Figur 24-d gezeigt. Figur 24-d entspricht den Ausgestaltungen in den vorhergehend dargestellten Beispielen.

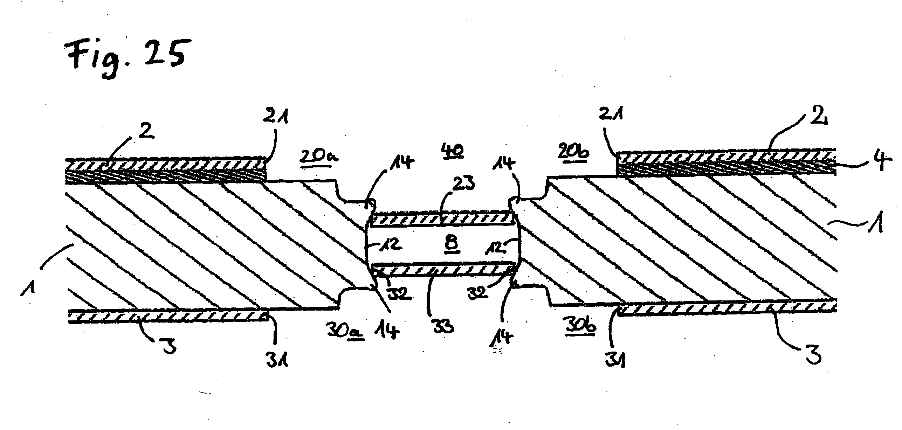

Figur 25 zeigt eine Verbindungsstelle 8 einer achten Ausführungsform. In dieser Ausführungsform ist die Verbindungsstelle weitgehend gleich zu derjenigen in Figur 11 (zweites Beispiel) ausgestaltet. Figur 25 zeigt eine entsprechende Schnittansicht wie Figur 11.

Abweichend von dem zweiten Ausführungsbeispiel ist hier zusätzlich zwischen der Distanzlage 1 und der ersten Dichtlage 2 eine weitere Lage 4, beispielsweise eine Sieblage, vorgesehen. Diese Lage 4 weist im Bereich der Verbindungsstelle 8 eine Durchgangsöffnung 40 auf. Der Steg 23 der Dichtlage 2 ist innerhalb der Durchgangsöffnung 40 abgekröpft und in gleicher Weise wie beim zweiten Ausführungsbeispiel mit der Distanzlage 1 verbunden. Über diese Verbindung wird die Dichtlage 2 senkrecht zur Lagenausdehnung formschlüssig mit der Distanzlage 1 verbunden. Da die weitere Lage 4 sich zwischen der Distanzlage 1 und der ersten Dichtlage 2 befindet, wird auch diese weitere Lage 4 durch die Verbindung der Distanzlage 1 mit der ersten Dichtlage 2 zwischen diesen beiden Lagen festgehalten.

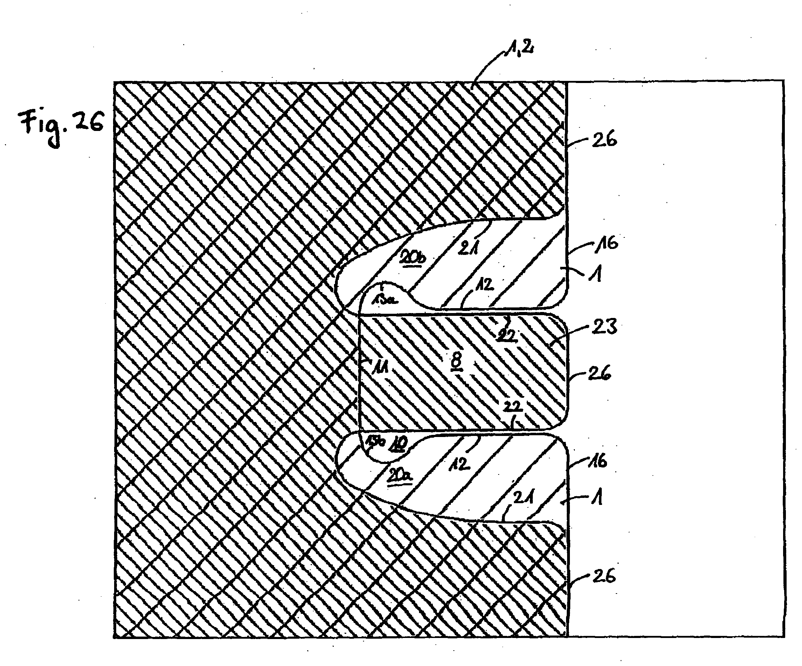

Figur 26 zeigt eine Aufsicht/Durchsicht auf übereinanderliegende erste und zweite Lagen im noch nicht verbundenen Zustand nach einem neunten Beispiel. Dieses Beispiel ist ähnlich gestaltet wie das Beispiel in Figur 4 (erstes Beispiel). Abweichend von dem ersten Beispiel, wie es in Figur 4 dargestellt ist, ist die Verbindungsstelle 8 nunmehr am Außenrand 16 der ersten Distanzlage 1 und dem Außenrand 26 der ersten Dichtlage 2 angeordnet. Dabei ergibt sich eine Verbindungsstelle, die im Wesentlichen der oberen Hälfte der Darstellung in Figur 4 entspricht.

Die Distanzlage weist wiederum eine Ausnehmung 10 auf, deren Rand 11 zu beiden Seiten der Ausnehmung 10 direkt in den Außenrand 16 der Distanzlage 1 übergeht. Dadurch ergibt sich eine Einbuchtung in die Distanzlage 10.

In entsprechender Weise wie für das erste Ausführungsbeispiel in Figur 4 dargestellt, weist die zweite Dichtlage 2 Ausnehmungen 20a und 20b auf, die durch einen Steg 23 voneinander getrennt sind. Die Ausnehmungen 20a und 20b öffnen sich zum Rand 26 der zweiten Dichtlage 2 hin, so dass der Steg 23 eine sich aus der Dichtlage 2 erstreckende Zunge bildet. Der Außenrand 22 der Zunge 23 ist in diesem Ausführungsbeispiel unmittelbar dem Außenrand 12 der Ausnehmung 10 benachbart. Die Zunge 23 ist in gleicher Weise wie der Steg des ersten Ausführungsbeispiels abgekröpft, so dass sich der Außenrand 22 zumindest bereichsweise innerhalb der Ebene der Ausnehmung 10 befindet. Bei Verbindung der beiden Lagen 1 und 2 in entsprechender Weise, wie es für das erste Beispiel in Figur 7 dargestellt ist, ergibt sich eine in senkrechter Richtung zur Lagenebene formschlüssige Verbindung der Distanzlage 1 mit der Dichtlage 2.

Die in diesem Beispiel dargestellte Verbindungsstelle 8 kann längs des Außenrandes 16 und des Außenrandes 26 der Lagen 1 und 2 mehrfach vorgesehen werden. Ist die Orientierung der Zungen 23 bei verschiedenen Verbindungsstellen 8 jeweils gegeneinander gedreht, so kann insgesamt, beispielsweise durch Vorsehen von vier Verbindungsstellen 8 an vier Seiten der Dichtkonstruktion, eine vollständige, auch in der Lagenebene nicht verschlebliche, stabile Verbindung der beiden Lagen 1 und 2 bewirkt werden.

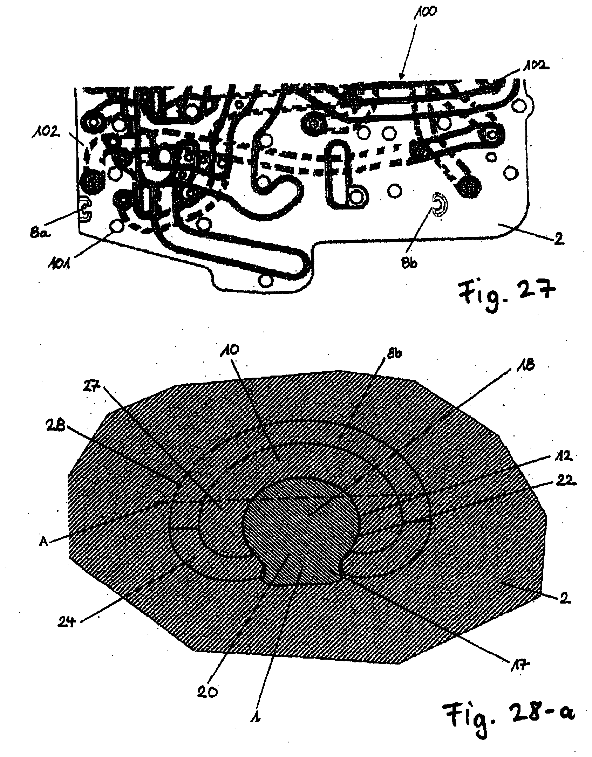

Figur 27 stellt einen Abschnitt einer Draufsicht bzw. virtuellen Durchsicht durch eine erfindungsgemäße Hydrauliksystemsteuerplatte 100 nach einem zehnten Ausführungsbeispiel dar und zeigt Verbindungsstellen 8a, 8b. Während die Verbindungsstelle 8b zwar in der Nähe der Außenkante der Hydrauliksystemsteuerplatte 100 liegt, reicht sie doch nicht bis an deren Außenrand. Verbindungsstelle 8a reicht dagegen bis an den Außenrand der Hydrauliksystemsteuerplatte 100. Auf die Illustration einer Beschichtung wurde in Fig. 27 verzichtet.

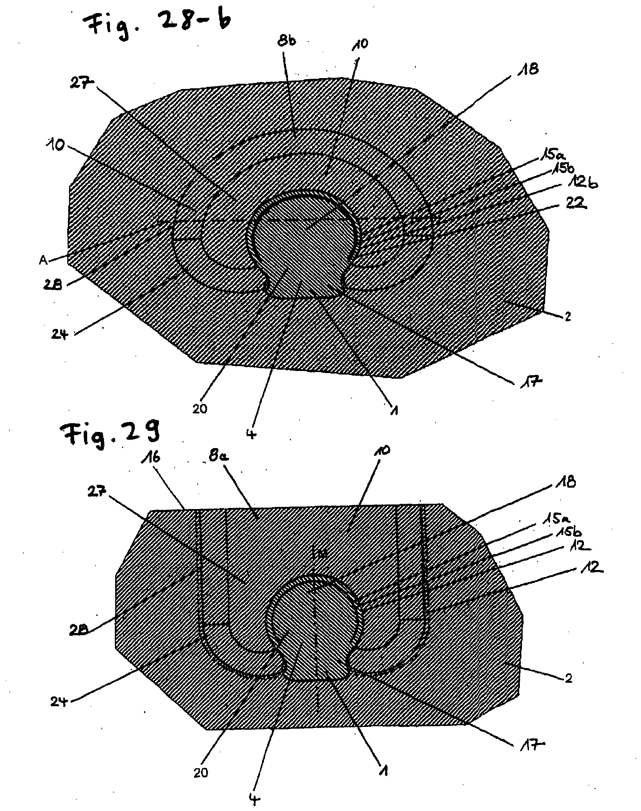

Figur 28-a zeigt eine Verbindungsstelle nach dem zehnten Beispiel entsprechend der Verbindungsstelle 8b aus Figur 27, allerdings im nur zusammengesetzten, aber noch nicht verbundenen Zustand. Die über den Großteil ihrer Fläche oben liegende Dichtlage 2 weist eine bogenförmige Aussparung 20 auf und ist entlang dieser Aussparung über eine große Strecke abgekröpft. Die Abkröpfung 24 besteht aus einem ab einer Knickstelle 28 schräg aus der Ebene der Dichtlage 2 nach unten verlaufenden Abschnitt und einem daran anschließenden Abschnitt 27, der im Wesentlichen parallel zur Ebene der Dichtlage 2 verläuft. In der Aussparung 20 ist ein Abschnitt der Distanzlage 1 aufgenommen. Der Abschnitt besteht aus einem schmalen Verbindungssteg 17, der sich in einem eckenfreien Kopf 18 (Stempel) nahtlos fortsetzt. Verbindungssteg 17 und Kopf 18 weisen zusammen eine Form auf, die einer Puzzleverbindung ähnelt, der Verbindungssteg 17 kann also im wesentlichen als Hals betrachtet werden. Die Außenkante 12 des Kopfs entspricht in Projektion in eine gemeinsame Ebene im Wesentlichen der Kante 22 der Aussparung 20, erstere (Außenkante 12) ist bevorzugt geringfügig von letzterer (Kante 22) beabstandet, um den Kopf 18 problemlos einführen zu können. Die Distanzlage 1 ist benachbart zum Kopf 18 bogenförmig bis etwa zur Knickstelle 28 der Dichtlage 2 ausgespart. Diese Aussparung 10 nimmt wiederum die Abkröpfung 24 der Dichtlage 2 auf.

In Figur 28-b ist dieselbe Verbindungsstelle wie in Figur 28-a dargestellt, nun allerdings im verbundenen Zustand. Entlang des Außenrandes 12 des Kopfs 18 verläuft beabstandet zu diesem Außenrand 12 eine Einkerbung 15a. Dadurch ergibt sich ein schmaler sichelförmiger Bereich 15b, der zwischen Einkerbung 15a und Außenrand 12 sich erstreckt. Durch die Einkerbung 15a wurde dieser sichelförmige Bereich 15b über den ursprünglichen Kantenverlauf 12 hinaus verformt. Durch diese Umformung reicht der Kantenverlauf 12 über den Rand 22 der Aussparung 20 der Dichtlage 2 und hält diese formschlüssig fest.

Figur 29 zeigt als elftes Beispiel eine Verbindungsstelle vergleichbar der Verbindungsstelle 8a aus Figur 27. Sie unterscheidet sich von der Verbindungsstelle 8b bzw. der in Figur 28 genauer betrachteten Verbindungsstelle 8b vor allem dadurch, dass die Distanzlage 1 hier über einen größeren Bereich ausgespart ist und der Verlauf des abgekröpften Bereichs 24 in der Dichtlage 2 an die Aussparung 10 angepasst ist. Die Begrenzung dieser Aussparung 10, mit strichpunktierter Linie angedeutet, setzt sich, ausgehend von Kopf 18 und Verbindungssteg 17, zunächst wie im vorhergehenden Ausführungsbeispiel beidseitig leicht gekrümmt fort und entfernt sich dabei vom Verbindungssteg 17, ehe die Richtung parallel zur Mittellinie M von Verbindungssteg 17 und Kopf 18 verläuft. Hier erfolgt nun aber anders als im vorhergehenden Ausführungsbeispiel keine Zusammenführung der beiden Kanten der Aussparung 10, die zum Ringschluß und damit zum Abschließen der Aussparung 10 führen würde, sondern die Kanten verlaufen parallel zur Mittellinie M weiter und gehen in die Außenkante 16 der Distanzlage 1 über. Die Knicklinie 28 der Abkröpfung 24 verläuft leicht in Richtung des Inneren der Aussparung 10 in der Distanzlage 1 versetzt parallel zur Kante des in der Distanzlage 1 ausgesparten Bereichs 10. Wie in Figur 28-b ist auch hier der verbundene Zustand dargestellt, der an die Einkerbung 15a angrenzende sichelförmige Bereich 15b hat sich über einen Teil des abgekröpften Bereichs 27 der Dichtlage 2 geschoben und hält diesen formschlüssig fest.

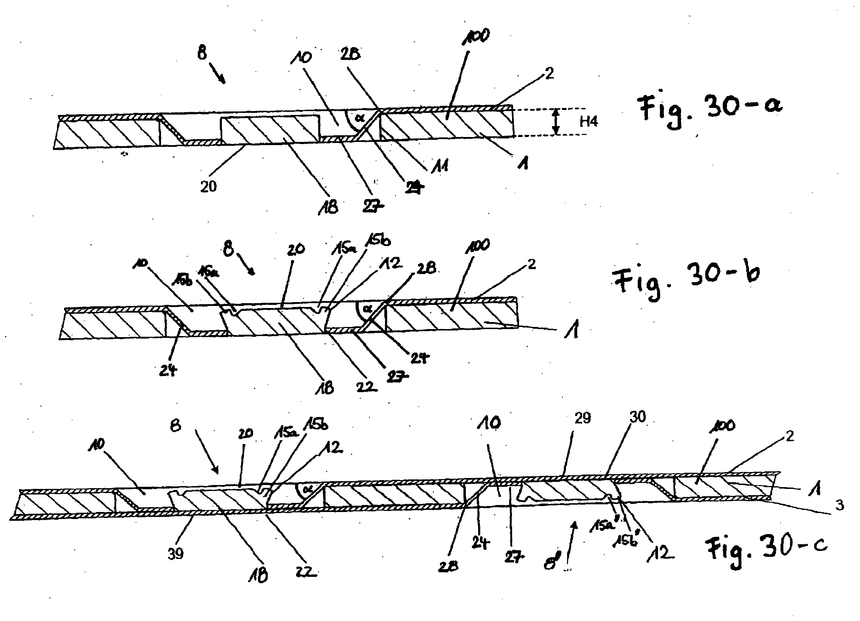

Figur 30 zeigt als zwölfte Beispiele Schnitte durch weitere Ausführungsbeispiele erfindungsgemäßer Verbindungsstellen 8.

Figur 30-a zeigt einen Schnitt durch eine Verbindungsstelle, beispielsweise entlang der Linie A in Figur 28-a, die die Verbindung zwischen einer Distanzlage 1 und einer Dichtlage 2 darstellt im noch nicht verbundenen Zustand. Dabei kann es sich entweder um eine unabhängig von einer weiteren, auf der Unterseite der Distanzlage 1 angeordneten weiteren Dichtungslage 3 betrachtete Verbindungsstelle eines dreilagigen Systems handeln oder um die Verbindungsstelle eines zweilagigen Systems. Es wird in Figur 30-a deutlich, dass die Distanzlage 1 im Bereich 10 um den Kopf 18 herum als Aussparung 10 ausgespart ist, während die Aussparung 20 der Dichtlage 2 sich im wesentlichen über den Bereich des Kopfs 18 erstreckt. Die Außenkante 11 der Aussparung 10 fällt - in Projektion in eine gemeinsame Ebene - mit dem Verlauf der Knicklinie 28 der Kröpfung 24 zusammen. Der abgewinkelt verlaufende Abschnitt der Kröpfung 24 überspannt im Wesentlichen einen Bereich, der der Höhe der Distanzlage 1, H4 entspricht, so dass der ebene Bereich 27 der Kröpfung nach unten im Wesentlichen bündig mit der Unterseite des Kopfs 18 abschließt und nicht übersteht.

Figur 30-b schneidet entsprechend durch die Verbindungsstelle aus Figur 28-b, zeigt also den verbundenen Zustand der Verbindungsstelle aus Figur 30-a. Der Kopf 18 weist beidseitig eine Einkerbung 15a auf, die durch einen schmalen Bereich 15b von der Außenkante 12 des Kopfs getrennt ist. Der schmale Bereich 15b ist durch die Einkerbung 15a in Richtung der Außenkante 12 verformt und reicht über die freie Kante 22 der Dichtlage 2. Deshalb ragt die Distanzlage 1 über einen kurzen Abschnitt der Oberfläche des abgesenkten Abschnitts 27 der Kröpfung 24 und hält dadurch die Dichtlage 2 formschlüssig fest.

Figur 30-c zeigt einen abschnittsweisen Querschnitt durch eine erfindungsgemäße dreilagige Hydrauliksystemsteuerplatte 100, wobei im gezeigten Abschnitt sowohl eine Verbindungsstelle 8 von erster Dichtlage 2 und Distanzlage 1 als auch eine Verbindungsstelle 8' von zweiter Dichtlage 3 und Distanzlage 1 zu sehen sind. Beide Verbindungsstellen sind im verbundenen Zustand gezeigt. Die Verbindungsstelle 8 entspricht dabei der in Figur 30-b gezeigten Verbindungsstelle bis auf den Unterschied, dass die zweite Dichtlage 3 die Verbindungsstelle 8 überspannt. Der die Verbindungsstelle 8 überspannende Bereich 39 ist dabei ein unstrukturierter Abschnitt der Dichtlage 3. Verbindungsstelle 8' entspricht im wesentlichen Verbindungsstelle 8, außer dass die Lagen 2 und 3 in sämtlichen Funktionen gegeneinander getauscht sind und die Dichtlage 3 entsprechend von unten statt von oben mit der Distanzlage 1 verbunden ist. Die Verbindungsstelle 8' wird von einem Bereich 29 der Dichtlage 2 überspannt.

Figur 30-c zeigt also zwei in der Lagenebene versetzt zueinander angeordnete Verbindungsstellen 8, 8', die jeweils eine der Dichtlagen 2 oder 3 mit der Distanzlage 1 verbinden. Dadurch, dass die jeweils andere Dichtlage 3 oder 2 an der Verbindungsstelle unterbrechungsfrei ist, ergibt sich insgesamt ein in Querrichtung zur Lagenebene fluiddichter Verbund aller drei Lagen 1, 2, 3.

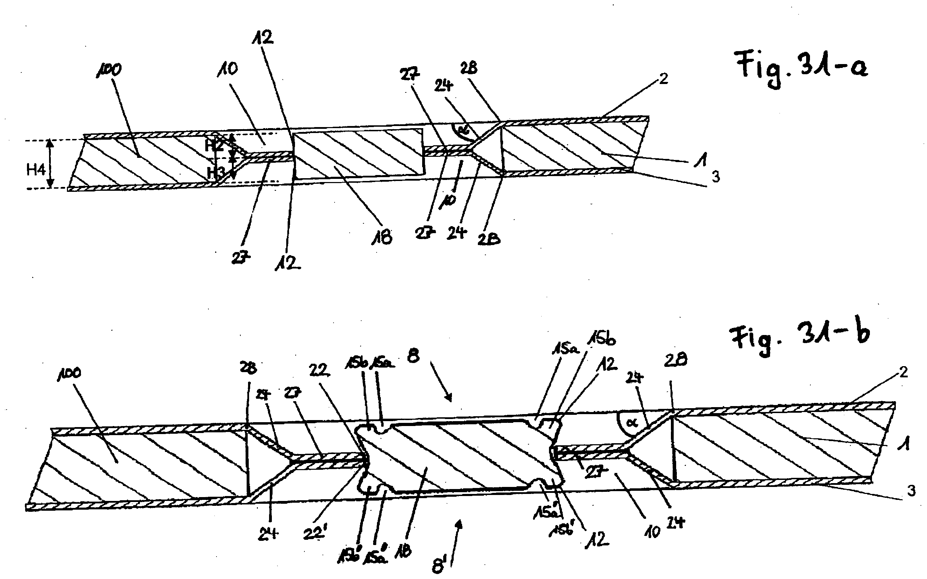

Aus Figur 31 geht als dreizehntes Beispiel eine alternative Verbindungsmöglichkeit für zwei Dichtlagen 2, 3 mit einer dazwischen angeordneten Distanzlage 1 hervor. Figur 31-a zeigt im noch nicht verbundenen Zustand wie sowohl von unten als auch von oben jeweils eine Dichtlage 2, 3 auf den Kopf 18 der Distanzlage 1 aufgeschoben ist, wobei noch kein Formschluss besteht. Die Dichtlagen 2, 3 verlaufen dabei im gezeigten Ausschnitt im Wesentlichen spiegelverkehrt. Sie greifen jeweils mit einem abgekröpften Abschnitt 24 in die Ausnehmung 10 der Distanzlage 1 ein. Der abgekröpfte Abschnitt 24 verläuft dabei jeweils beginnend ab einer Knicklinie 28 zunächst als schräger Abschnitt vorteilhafterweise als besonderes Merkmal mit einem Winkel α von 10° bis 60° zur Mittenebene der jeweiligen Dichtlagen 2, 3 und geht dann in einen parallel zu dieser Mittenebene verlaufenden geraden Abschnitt 27 über. Die Höhe der Abkröpfung H2, H3, entspricht dabei jeweils ungefähr der halben Höhe der Dicke H4 der Distanzlage 1.

In Figur 31-b ist ergänzend der verbundene Zustand dargestellt. An beiden Verbindungsstellen 8 und 8', d.h. auf der Ober- und Unterseite des Kopfs 18 weist dieser jeweils beidseitig eine Einkerbung 15a, 15a' auf, die eine Verformung des an die Einkerbung 15a, 15a' anschließenden Bereichs 15b, 15b' bewirkt und den Außenrand 12 des Kopfs 18 verschiebt. Dadurch überlappt dessen Außenkante 12 mit dem Rand 22, 22' der jeweiligen Dichtlage 2, 3. Die Verbindung entspricht also im Wesentlichen der für die binäre Verbindung einer Dichtlage 2, 3 mit der Distanzlage 1. Die abgekröpften Bereiche 27 erfahren hier allerdings eine gegenseitige Unterstützung, während die vergleichbaren Bereiche der binären Verbindung keine Auflagefläche haben.

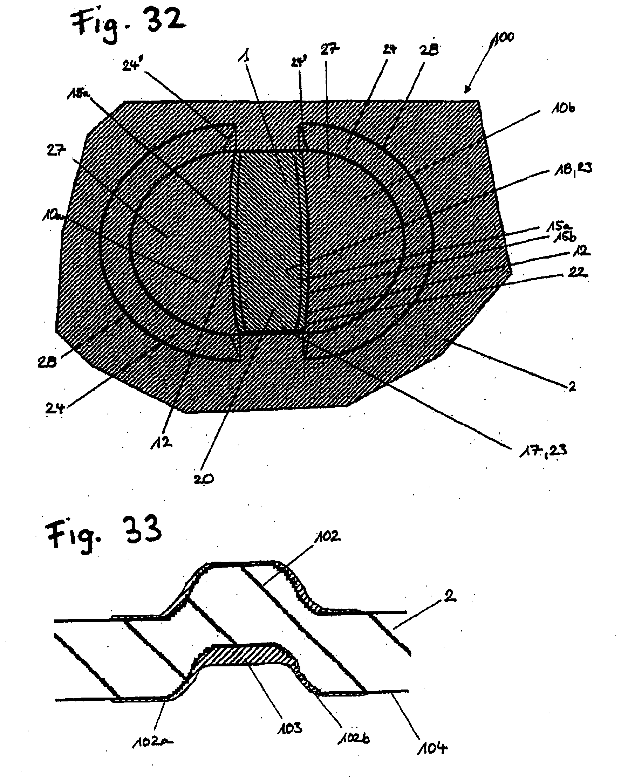

Figur 32 zeigt als vierzehntes Beispiel eine Draufsicht auf einen Ausschnitt eines weiteren Ausführungsbeispiels einer erfindungsgemäßen Hydrauliksystemsteuerplatte 100 im verbundenen Zustand der Lagen. Dieses Ausführungsbeispiel unterscheidet sich von den vorgenannten zwölften und dreizehnten Ausführungsbeispielen durch eine abweichende Form der Ausnehmungen 20, 10 in Dichtungs- und Distanzlage 2, 1 sowie entsprechend durch die Form von Verbindungssteg 17 und Kopf 18 in der Distanzlage 1. Der Verbindungssteg 17 und der Kopf 18 gehen hier nahtlos ineinander über, bilden einen Steg 23 und können nicht als voneinander getrennt betrachtet werden. Anders als in den vorangehenden Ausführungsbeispielen aus Figuren 17ff ist die Verbindungssteg-Kopf-Kombination hier beidseitig ähnlich wie in den anfangs genannten Ausführungsbeispielen mit der Distanzlage 1 verbunden. Sie ist eckenfrei und weicht mit einem leichten nach außen zeigenden, sich mittig verdickenden Bogen von einer geraden Form ab. Die sich daran beidseitig anschließende Ausnehmung 10 in der Distanzlage 1 ist hier nicht einteilig, sondern wird durch die durchgehende Verbindungssteg-Kopf-Kombination in zwei näherungsweise halbmondförmige Hälften 10a, 10b geteilt. Ebenso weist die Verbindungsstelle zwei abgekröpfte Abschnitte 24 in der Dichtungslage 2 auf, die jeweils näherungsweise einen C-förmigen Bogen beschreiben. Die Abwinklungen 24 erfolgen hier nicht nur radial nach außen, sondern auch im Bereich 24', der den Übergang in Richtung der Verbindungssteg-Kopf-Kombination schafft. Die Verbindungssteg-Kopf-Kombination weist als besonderes vorteilhaftes Merkmal entlang ihrer beiden Ränder 12 je eine Einkerbung 15a auf, die denselben Verbindungsmechanismus wie zuvor beschrieben bewirken. Auch bei dieser Ausführungsform ist es möglich, an derselben Stelle Verbindungen zwischen einer Distanzlage 1 und zwei oder mehr angrenzenden Dichtlagen 2, 3 zu schaffen.

In den meisten vorangehenden Ausführungsbeispielen wurde auf die Darstellung von Beschichtungen zugunsten einer besseren Übersichtlichkeit verzichtet. Bei den Beschichtungen kann man zwischen Anwendungen mit vorbeschichteten Blechen und Beschichtung nach Umformung unterscheiden. Während letztere zu einer im Wesentlichen gleich bleibenden Beschichtungsdicke über den gesamten beschichteten Bereich oder im Falle vollflächiger Beschichtungen über das gesamte Blech führen, sammelt sich bei letzteren in Vertiefungen Beschichtungsmaterial an, so dass sich eine ungleichmäßige Dicke ergibt. Figur 33 zeigt als ein fünfzehntes Beispiel stellvertretend eine partielle Beschichtung 103 einer Dichtlage 2 im Bereich einer Vollsicke 102. Es handelt sich hier um eine nach dem Umformen beschichtete Dichtlage 2, die beispielsweise mittels Siebdruck aufgebracht wurde, so dass die Dicke der Beschichtung in der Konkavität der Sicke 102 besonders groß ist, während in anderen Bereichen der Sicke 102 und im sich daran unmittelbar anschließenden Bereich lediglich sichergestellt ist, dass das Blech hinreichend beschichtet ist. Die Beschichtung 103 erstreckt sich ungefähr um eine halbe Sickenbreite über die Wendepunkte der Sickenfüße 102a, 102b hinaus. Daran schließt sich ein unbeschichteter Bereich 104 an.

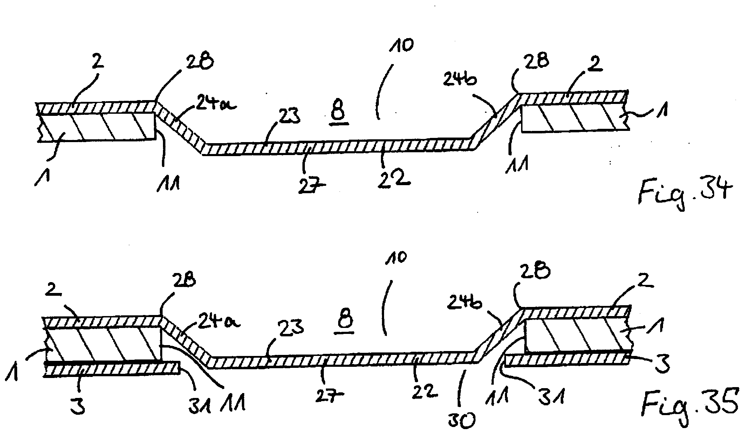

Fig. 34 zeigt als sechzehntes Beispiel einen Querschnitt durch einen Verbindungspunkt einer zweilagigen Dichtung ähnlich demjenigen in Fig. 5 noch vor Verbindung der beiden Lagen 1 und 2 miteinander. In Figur 34 ist der Steg 23 durch die Aussparung 10 der Lage 1 gepresst, so dass seine Außenkante 22 von der zweiten Lage 2 aus gesehen unterhalb der Lagenebene der ersten Lage 1 verläuft. Hierzu ist die Lage 2 im Bereich der Aussparung 10 mit Abkröpfungen 24a, 24b versehen, die an einer Knickstelle 28 beginnend einen unter einem schrägen Winkel α gegenüber der Lagenebene der Lage 2 verlaufenden Bereich bilden, während der zentrale Bereich 27 der freien Kante 22 zwischen den Abkröpfungen 24a, 24b sich parallel zur Lagenebene erstreckt. Dieser zentrale Bereich liegt unterhalb der ersten Lage 1. Durch ein Verstemmen des Randes 11 der ersten Lage 1 kann dann ein Formschluß zwischen dem zentralen Bereich 27 des Stegs 23 und der ersten Lage 1 hergestellt werden, der die zweite Lage 2 mit der ersten Lage 1 verbindet.

Wesentlich ist hier, daß auch Ausführungsformen möglich sind, bei denen der Steg 23 in seinem zentralen Bereich 27 nicht vollständig unterhalb der Lage 1 verläuft, sondern auch nur teilweise aus der Lagenebene der Lage 1 herausragt.

Fig. 35 zeigt als siebzehntes Beispiel einen Querschnitt durch einen Verbindungspunkt einer dreilagigen Dichtung ähnlich demjenigen in Fig. 12 noch vor Verbindung der beiden Lagen 1 und 2 miteinander. Im Unterschied zu der Ausführungsform der Fig. 12 weist in Figur 35 die dritte Dichtlage 3 im Bereich der Verbindungsstelle 8 eine Aussparung 30 mit einem umlaufenden Rand 31 auf. Der Steg 23 ist durch die Aussparung 10 der Lage 1 bis in den Bereich der Aussparung 30 der Lage 3gepresst, so dass seine Außenkante 22 von der zweiten Lage 2 aus gesehen unterhalb der Lagenebene der ersten Lage 1 verläuft. Hierzu ist die Lage 2 im Bereich der Aussparung 10 mit Abkröpfungen 24a, 24b versehen, die an einer Knickstelle 28 beginnend einen unter einem schrägen Winkel α gegenüber der Lagenebene der Lage 2 verlaufenden Bereich bilden, während der zentrale Bereich 27 der freien Kante 22 zwischen den Abkröpfungen 24a, 24b sich parallel zur Lagenebene erstreckt. Dieser zentrale Bereich liegt knapp unterhalb der ersten Lage 1, jedoch innerhalb der Aussparung 30 der dritten Lage 3. Durch ein Verstemmen des Randes 11 der ersten Lage 1 kann dann ein Formschluß zwischen dem zentralen Bereich 27 des Stegs 23 und der ersten Lage 1 hergestellt werden, der die zweite Lage 2 mit der ersten Lage 1 verbindet.

Auch bei einer derartigen dreilagigen Ausführungsform muß der mittlere Bereich 27 des Stegs 23 bzgl. seiner Dicke (d.h. senkrecht zur Lagenebene der ersten Lage 1) nicht vollständig unterhalb der ersten Lage 1 verlaufen. In weiteren Ausführungsformen kann er auch bzgl. seiner Dicke vollständig unterhalb der dritten Lage 3 verlaufen.

## Patentansprüche

1. Flachdichtung mit mindestens einer ersten (1) und einer zweiten (2) metallischen Lage, wobei mindestens die erste und die zweite metallische Lage (1,2) sich zumindest bereichsweise überdeckend übereinander angeordnet sind und an mindestens einer Verbindungsstelle (8) miteinander verbunden sind, wobei
an mindestens einer der Verbindungsstellen (8) die erste Lage (1) einen Rand (12) aufweist und die zweite Lage (2) mindestens eine freie Kante (22) aufweist, wobei die freie Kante (22) eine eingeprägte Abkröpfung derart aufweist, dass sie längs zumindest eines Abschnitts des Randes (12)
- benachbart zu dem Rand (12) innerhalb der Lagendicke der ersten Lage (1)
oder
- auf der von der zweiten Lage (2) abgewandten Seite der ersten Lage (1) teilweise oder vollständig außerhalb der Lagendicke der ersten Lage (1) verläuft, und
der Rand (12) unter Verfließen eines Materials des Randes (12), sodass sich eine Nase (14) ausbildet, derart verpresst ist, dass die Nase (14) längs zumindest eines Abschnitts des Randes (12) die freie Kante (22) senkrecht zur Lagenebene der ersten Lage (1) oberhalb oder unterhalb der zweiten Lage (2) zur Herstellung eines senkrecht zur Lagenebene der ersten Lage (1) wirkenden Formschlusses übergreift.

2. Flachdichtung nach dem vorhergehenden Anspruch, **dadurch gekennzeichnet, dass** an der Verbindungsstelle (8) die zweite Lage (2) einen Steg (23) aufweist, dessen Außenkante (22) zumindest bereichsweise als freie Kante (22) benachbart zu dem Rand (12) verläuft.

3. Flachdichtung nach dem vorhergehenden Anspruch, **dadurch gekennzeichnet, dass** der Steg (23) eine gerade, gekrümmte, runde, eckige oder ovale Form aufweist.

4. Flachdichtung nach einem der Ansprüche 2 und 3, **dadurch gekennzeichnet, dass** der Steg (23) symmetrisch zur Längsachse und/oder Querachse des Steges (23) oder rotationssymmetrisch um die Mitte des Steges (23) ausgebildet ist.

5. Flachdichtung nach einem der vorhergehenden Ansprüche, **gekennzeichnet durch** mindestens drei metallische Lagen (1,2,3), die sich zumindest paarweise zumindest bereichsweise überdeckend übereinander angeordnet sind, wobei die drei Lagen auf mindestens eine der folgenden Weisen miteinander verbunden sind:
a) die mittlere Lage ist mit jeder der zu ihr benachbarten Lagen jeweils paarweise an jeweils mindestens einer Verbindungsstelle (8) verbunden;
b) die zu einer mittleren Lage zu deren beiden Seiten benachbarte Lagen sind an mindestens einer Verbindungsstelle miteinander verbunden, wobei die mittlere Lage im Bereich der Verbindungsstelle eine Durchgangsöffnung aufweist;
c) eine erste (1) der mindestens drei Lagen weist einen Rand (12) auf und die mittlere Lage und eine der zu ihr benachbarten Lagen weisen jeweils eine freie Kante auf, wobei die beiden freien Kanten (22) derart abgekröpft sind, dass sie längs zumindest eines Abschnitts des Randes (12) benachbart zu dem Rand innerhalb der Lagendicke der ersten Lage (1) verlaufen;
d) eine erste, mittlere (1) der mindestens drei Lagen weist einen Rand (12) auf und zwei zu der mittleren Lage zu jeweils einer Seite benachbarte Lagen (2, 3) weisen jeweils eine freie Kante (22) auf, wobei die beiden freien Kanten (22) derart abgekröpft sind, dass sie längs zumindest eines Abschnitts des Randes (12) benachbart zu dem Rand (12) innerhalb der Lagendicke der ersten Lage (1) verlaufen.

6. Flachdichtung nach dem vorhergehenden Anspruch, **dadurch gekennzeichnet, dass** mindestens zwei Verbindungsstellen (8), die verschiedene Lagenpaare miteinander verbinden in der Lagenebene mindestens einer der Lagen zueinander beabstandet sind oder senkrecht zur Lagenebene mindestens einer der Lagen übereinander angeordnet sind.

7. Flachdichtung nach einem der vorhergehenden Ansprüche, **dadurch gekennzeichnet, dass** die Verbindungsstellen keine größere Dicke aufweisen als die Summe der Blechdicken der miteinander verbundenen Lagen.

8. Verfahren zur Herstellung einer Flachdichtung mit mindestens einer ersten (1) und einer zweiten (2) metallischen Lage, wobei mindestens die erste und die zweite metallische Lage (1,2) sich zumindest bereichsweise überdeckend übereinander angeordnet sind, und wobei an mindestens einer Verbindungsstelle (8) die erste Lage (1) einen Rand (12) aufweist und die zweite Lage (2) mindestens eine freie Kante (22) aufweist, die längs zumindest eines Abschnitts des Randes (12) benachbart zu dem Rand verläuft wobei, in die freie Kante (22) zumindest bereichsweise eine Abkröpfung derart eingeprägt wird, dass die freie Kante (22) der zweiten Lage längs zumindest eines Abschnitts des Randes (12)
- benachbart zu dem Rand (12) innerhalb der Lagendicke der ersten Lage (1)
oder
- auf der von der zweiten Lage (2) abgewandten Seite der ersten Lage (1) teilweise oder vollständig außerhalb der Lagendicke der ersten Lage (1) verläuft, und
der Rand (12) unter Verfließen eines Materials des Randes (12), sodass sich eine Nase (14) ausbildet, derart verpresst wird, dass längs zumindest eines Abschnitts des Randes (12) die Nase (14) die freie Kante (22) senkrecht zur Lagenebene der ersten Lage (1) oberhalb oder unterhalb der zweiten Lage (2) zur Herstellung eines senkrecht zur Lagenebene der ersten Lage (1) wirkenden Formschlusses übergreift.

9. Verfahren nach dem vorhergehenden Anspruch, **dadurch gekennzeichnet, dass** das Verformen der freien Kante (22) und das Verpressen des Randes (12) mit demselben Werkzeug und/oder im selben Verfahrensschritt erfolgt.

10. Verfahren nach einem der Ansprüche 8 und 9, **dadurch gekennzeichnet, dass** das Werkzeug ein Prägestempel, insbesondere ein symmetrischer oder rotationssymmetrischer Prägestempel, ist.

11. Verwendung eines Verfahrens nach einem der Ansprüche 8 bis 10 zum Herstellen einer Abgasdichtung, einer Zylinderkopfdichtung oder einer Steuerplatte.

## Claims

1. Flat gasket with at least a first (1) and a second (2) metallic layer, with at least the first and the second metallic layer (1, 2) being arranged one above the other in an at least partially covering manner and connected to each other at at least one connection portion (8), wherein, in at least one of the connection portions (8), the first layer (1) comprises a border (12) and the second layer (2) comprises at least one free edge (22), where the free edge (22) comprises an embossed cranked section in such a way, that it extends along at least a section of the border (12)
- adjacent to the border (12) within the layer thickness of the first layer (1)
or
- on the side of the first layer (1) pointing away from the second layer (2) partially or completely outside of the layer thickness of the first layer (1), and
the border (12) under flow of material of the border (12), so that a lug (14) is formed, is compressed in such a manner, that along at least a section of the border (12) the lug (14) overlaps the free edge (22) orthogonally to the plane of the layer of the first layer (1) above or below the second layer (2) in order to form a positive fit which acts orthogonally to the plane of the layer of the first layer (1).

2. Flat gasket according to the preceding claim, **characterized in that** at the connection portion (8), the second layer (2) comprises a bridge (23), the outer edge (22) of which bridge extends at least in sections as a free edge (22) adjacent to the border (12).

3. Flat gasket according to the preceding claim, **characterized in that** the bridge (23) has a straight, curved, round, cornered or oval shape.

4. Flat gasket according to one of claims 2 and 3, **characterized in that** the bridge (23) is formed symmetric to the longitudinal axis and/or the transversal axis of the bridge (23) or rotationally symmetrical around the center of the bridge (23).

5. Flat gasket according to one of the preceding claims, **characterized by** at least three metallic layers (1,2,3), which at least pair-wise are arranged covering each other at least in sections, with the three layers being connected by at least one of the following manners:
a) the middle layer is connected with each of its adjacent layers pair wise each at at least one connection portion (8) each;
b) the layers arranged adjacent to a middle layer at its both sides are connected at at least one connection portion, with the middle layer having a passage opening in the area of the connection portion;
c) a first one (1) of the at least three layers comprises a border (12) and the middle layer as well as one of the layers adjacent to the middle layer each comprise a free edge, with both free edges (22) being cranked in such a way that they extend along at least a section of the border (12) neighboring to the border within the layer thickness of the first layer (1);
d) a first middle (1) one of the at least three layers comprises a border (12) and two layers (2, 3) adjacent to the middle layer each on one side comprise each a free edge (22), with both free edges (22) being cranked in such a manner that they extend along at least a section of the border (12) adjacent to the border (12) within the layer thickness of the first layer (1).

6. Flat gasket according to the preceding claim, **characterized in that** at least two connection portions (8), which interconnect different pairs of layers, are distanced to each other in the plane of the layer of at least one of the layers or are arranged one on top of the other orthogonal to the plane of the layer of at least one of the layers.

7. Flat gasket according to one of the preceding claims, **characterized in that** the connection portions show no bigger thickness than the sum of the sheet thicknesses of the layers connected to each other.

8. Method for the production of a flat gasket with at least a first (1) and a second (2) metallic layer, with at least the first and the second metallic layer (1, 2) being arranged one on top of the other overlapping at least in sections, and wherein at at least one connection portion (8) the first layer (1) comprises a border (12) and the second layer (2) comprises a free edge (22), which extends along at least a section of the border (12) adjacent to the border, wherein in the free edge (22) at least in sections a cranked section is embossed in such a way, that, the free edge (22) of the second layer extends along at least a section of the border (12)
- adjacent to the border (12) within the layer thickness of the first layer (1)
or
- on the side of the first layer (1) pointing away from the second layer (2) partially or completely outside the layer thickness of the first layer (1), and
wherein the border (12) under flow of material of the border (12), so that a lug (14) is formed, is compressed in such a manner, that along at least a section of the border (12) the lug (14) overlaps the free edge (22) orthogonally to the plane of the layer of the first layer (1) above or below the second layer (2) in order to form a positive fit which acts orthogonally to the plane of the layer of the first layer (1).

9. Method according to the preceding claim, **characterized in that** the deformation of the free edge (22) and the compression of the border (12) is realized with the same tool and/or in the same step.

10. Method according to one of claims 8 and 9, **characterized in that** the tool is a stamp, in particular a symmetrical or rotationally symmetric stamp.

11. Use of a method according to one of claims 8 to 10 for manufacturing an exhaust gasket, a cylinder head gasket or a control plate.

## Revendications

1. Joint d'étanchéité plat avec au moins une première (1) et une deuxième (2) couche métallique, au moins la première et la deuxième couche métallique (1, 2) étant disposées l'une sur l'autre de façon à se recouvrir au moins à certains endroits et étant reliées entre elles au moins au niveau d'un point de liaison (8),
au niveau d'au moins un des points de liaison (8), la première couche (1) comprenant un bord (12) et la deuxième couche (2) comprenant au moins une arête libre (22), l'arête libre (22) présentant une partie coudée estampée de façon à ce qu'elle s'étende le long d'au moins une partie du bord (12),
- à proximité du bord (12) à l'intérieur de l'épaisseur de couche de la première couche (1)
ou
- sur le côté opposé à la deuxième couche (2) de la première couche (1) partiellement ou entièrement à l'extérieur de l'épaisseur de couche de la première couche (1) et
le bord (12), sous l'action du fluage d'un matériau du bord (12), de façon à former un embout (14), est comprimé de façon à ce que l'embout (14) déborde, le long d'au moins une partie du bord (12), sur l'arête libre (22) perpendiculairement au plan de la première couche (1) au-dessus ou en dessous de la deuxième couche (2) pour l'établissement d'une complémentarité de forme agissant perpendiculairement au plan de la première couche (1).

2. Joint d'étanchéité selon la revendication précédente, **caractérisé en ce que**, au niveau du point de liaison (8), la deuxième couche (2) comprend une nervure (23) dont l'arête externe (22) s'étend au moins à certains endroits en tant qu'arête libre (22) à proximité du bord (12).

3. Joint d'étanchéité selon la revendication précédente, **caractérisé en ce que** la nervure (23) présente une forme droite, incurvée, ronde, angulaire ou ovale.

4. Joint d'étanchéité selon l'une des revendications 2 et 3, **caractérisé en ce que** la nervure (23) est conçue de manière symétrique à l'axe longitudinal et/ou l'axe transversal de la nervure (23) ou de manière symétrique en rotation autour du centre de la nervure (23).

5. Joint d'étanchéité selon l'une des revendications précédentes, **caractérisé par** au moins trois couches métalliques (1, 2, 3) qui sont disposées les unes sur les autres de façon à se recouvrir au moins par paires au moins à certains endroits, les trois couches étant reliées entre elles d'au moins une des manières suivantes :
a) la couche centrale est reliée avec chacun des couches voisines par paire au niveau d'au moins un point de liaison (8) ;
b) les couches adjacentes à une couche centrale sur ses deux côtés sont reliées entre elles au moins au niveau d'un point de liaison, la couche centrale comprenant, au niveau du point de liaison, une ouverture de passage ;
c) une première (1) des au moins trois couches comprend un bord (12) et la couche centrale et une des couches adjacentes à celle-ci comprennent chacune une arête libre, les deux arêtes libres (22) étant coudées de façon à ce qu'elles s'étendent le long d'au moins une partie du bord (12) à proximité du bord à l'intérieur de l'épaisseur de couche de la première couche (1) ;
d) une première couche centrale (1) des au moins trois couches comprend un bord (12) et deux couches (2, 3) adjacentes à la couche centrale, chacune sur un côté, comprennent chacune une arête libre (22), les deux arêtes libres (22) étant coudées de façon à ce qu'elles s'étendent le long d'au moins une partie du bord (12) à proximité du bord (12) à l'intérieur de l'épaisseur de couche de la première couche (1).

6. Joint d'étanchéité plat selon la revendication précédente, **caractérisé en ce qu'**au moins deux points de liaison (8), qui relient différentes paires de couches entre elles, sont distants entre eux dans le plan de couche d'au moins une des couches ou sont disposés l'un sur l'autre perpendiculairement au plan de couche d'au moins une des couches.

7. Joint d'étanchéité plat selon l'une des revendications précédentes, **caractérisé en ce que** les points de liaison ne présentent pas d'épaisseur supérieure à la somme des épaisseurs de couches des couches reliées entre elles.

8. Procédé de fabrication d'un joint d'étanchéité plat avec au moins une première (1) et une deuxième (2) couche métallique, au moins la première et la deuxième couche métallique (1, 2) étant disposées de façon à se recouvrir au moins à certains endroits et, au niveau d'au moins un point de liaison (8), la première couche (1) comprenant un bord (12) et la deuxième couche (2) comprenant au moins une arête libre (22), qui s'étend le long d'au moins une partie du bord (12) à proximité du bord, un coude étant estampé dans l'arête libre (22), au moins à certains endroits, de façon à ce que l'arête libre (22) de la deuxième couche s'étende le long d'au moins une partie du bord (12),
- à proximité du bord (12) à l'intérieur de l'épaisseur de couche de la première couche (1)
ou
- sur le côté opposé à la deuxième couche (2) de la première couche (1) partiellement ou entièrement à l'extérieur de l'épaisseur de couche de la première couche (1) et
le bord (12), sous l'action du fluage d'un matériau du bord (12), de façon à former un embout (14), est comprimé de façon à ce que l'embout (14) déborde, le long d'au moins une partie du bord (12), sur l'arête libre (22) perpendiculairement au plan de couche de la première couche (1) au-dessus ou en dessous de la deuxième couche (2) pour l'établissement d'une complémentarité de forme agissant perpendiculairement au plan de couche de la première couche (1).

9. Procédé selon la revendication précédente, **caractérisé en ce que** la déformation de l'arête libre (22) et la compression du bord (12) sont effectuées avec le même outil et/ou dans la même étape de procédé.

10. Procédé selon l'une des revendications 8 et 9, **caractérisé en ce que** l'outil est un poinçon, plus particulièrement un poinçon symétrique ou à symétrie de rotation.

11. Utilisation d'un procédé selon l'une des revendications 8 à 10 pour la fabrication d'un joint d'étanchéité pour gaz d'échappement, d'un joint d'étanchéité de cylindre ou d'une plaque de commande
